# EUROPEAN PATENT APPLICATION

(11) **EP 4 604 657 A1**
(43) Date of publication of application: **20.08.2025**
(21) Application number: 23876636.4
(22) Date of filing: 09.10.2023
(51) Int. Cl.: H04W 74/08

(54) **METHOD AND APPARATUS USED IN COMMUNICATION NODE FOR RADIO COMMUNICATION**

(30) Priority: 14.10.2022 CN 202211260517
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/123483
(87) International publication number: WO 2024/078434

(57) **Abstract**

The present application discloses a method and apparatus used in a communication node for radio communication. A communication node sends a preamble on K1 time-frequency resources, a first reference time-frequency resource being one of the K1 time-frequency resources; then listens for first signaling in response to the sending of the preamble on the K1 time-frequency resources, the first signaling being used for scheduling a random access response, and the first signaling being scrambled by a first RNTI, wherein each time-frequency resource among the K1 time-frequency resources is used for the preamble; the first RNTI depends on only the first reference time-frequency resource among the K1 time-frequency resources; and K1 is an integer greater than 1. The solution provided by the present application is for multiple PRACH transmissions, and avoids the use of a plurality of RA-RNTI to listen for a random access response, thereby reducing power consumption and reducing complexity.

## Description

### Technical Field

This application relates to a transmission method and apparatus in a wireless communication system, and in particular, to a random access transmission method and apparatus.

### Related Art

Coverage (Coverage) is one of key factors considered by operators when commercializing cellular communication networks, because it directly affects service quality (service quality), capital expenditure (CAPEX), and operating costs (OPEX). In most actually deployed scenarios, uplink (Uplink, UL) performance may be a bottleneck, and in some emerging vertical use cases, uplink traffic is very large, for example, video uploading. In Rel-17 "NR (New Radio, new radio) coverage enhancement" work item (work item, WI), NR coverage is expanded and enhanced for a PUSCH (Physical uplink shared channel, physical uplink shared channel), a PUCCH (Physical uplink control channel, physical uplink control channel), and Msg3 (Message 3, message 3). However, coverage of a PRACH (Physical random access channel, physical random access channel) has not been improved yet. Because PRACH transmission is very important in many processes, such as initial access and beam failure recovery, a "further NR coverage enhancement (Further NR coverage enhancement)" work item is set up in Rel-18, to further enhance uplink coverage of the PRACH.

### SUMMARY

In NR, each time UE (User Equipment, user equipment) sends a Preamble, an RA (Random Access, random access)-RNTI (Radio Network Temporary Identifier, radio network temporary identifier) is calculated based on a PRACH occasion used for sending the Preamble, and PDCCH (Physical downlink control channel, physical downlink control channel) transmission that is for a random access response and that is scrambled by the RA-RNTI is monitored in ra-ResponseWindow. Because the existing protocol does not support PRACH repetition, monitoring, according to the existing protocol, the PDCCH that is for the random access response may reduce random access performance of the UE. Therefore, for the PRACH repetition, how to monitor the PDCCH transmission that is for the random access response needs to be enhanced.

In view of the foregoing problem, this application provides a solution to random access. An NR system is used as an example in the description of the foregoing problem. This application is also applicable to, for example, a scenario of an LTE system. Further, although this application is originally aimed at a Uu air interface, this application can also be applied to a PC5 interface. Further, although this application is originally aimed at a scenario of a terminal and a base station, this application is also applicable to a scenario of V2X (Vehicle-to-Everything, vehicle-to-everything), a communication scenario between a terminal and a relay, and a communication scenario between a relay and a base station, to obtain a technical effect similar to that in the scenario of a terminal and a base station. Further, although this application is originally aimed at the scenario of a terminal and a base station, this application is also applicable to a communication scenario of IAB (Integrated Access and Backhaul, integrated access and backhaul), to obtain the technical effect similar to that in the scenario of a terminal and a base station. Further, although this application is originally aimed at a terrestrial network (Terrestrial Network, terrestrial network) scenario, this application is also applicable to a non-terrestrial network (Non-Terrestrial Network, NTN) communication scenario, to obtain a technical effect similar to that in the TN scenario. In addition, using a unified solution in different scenarios further helps reduce hardware complexity and costs.

As an embodiment, for explanation of the terminology (Terminology) in this application, refer to definition in a TS36 series of 3GPP standard protocols.

As an embodiment, for explanation of the terminology in this application, refer to definition in a TS38 series of 3GPP standard protocols.

As an embodiment, for explanation of the terminology in this application, refer to definition in a TS37 series of 3GPP standard protocols.

As an embodiment, for explanation of the terminology in this application, refer to definition in IEEE (Institute of Electrical and Electronics Engineers, institute of electrical and electronics engineers) standard protocols.

It should be noted that, an embodiment for any node in this application and features in the embodiment may be applied to any other node if there is no conflict. The embodiments in this application and features in the embodiments may be combined with each other randomly if there is no conflict.

This application discloses a method used in a first node for radio communication, including:
sending a Preamble on K1 time-frequency resources, a first reference time-frequency resource being one of the K1 time-frequency resources; and monitoring first signaling as a response to sending the Preamble on the K1 time-frequency resources, the first signaling being used for scheduling a random access response, and the first signaling being scrambled by a first RNTI (Radio Network Temporary Identifier, radio network temporary identifier);
where each of the K1 time-frequency resources is used for the Preamble; the first RNTI depends on only the first reference time-frequency resource in the K1 time-frequency resources; and K1 is an integer greater than 1.

As an embodiment, problems to be resolved in this application include: how to monitor the first signaling.

As an embodiment, problems to be resolved in this application include: how to determine the first RNTI.

As an embodiment, characteristics of the foregoing method include: monitoring the first signaling by using a first RNTI.

As an embodiment, characteristics of the foregoing method include: the first RNTI depends on only the first reference time-frequency resource in the K1 time-frequency resources.

As an embodiment, characteristics of the foregoing method include: for a Preamble sent on the K1 time-frequency resources, only the first reference time-frequency resource in the K1 time-frequency resources is used for calculating the first RNTI, to be used for monitoring the first signaling.

As an embodiment, benefits of the foregoing method include: reducing complexity.

As an embodiment, benefits of the foregoing method include: being compatible with an existing protocol.

As an embodiment, benefits of the foregoing method include: avoiding monitoring a plurality of RNTIs.

As an embodiment, benefits of the foregoing method include: reducing power consumption of the UE.

According to one aspect of this application, where a first reference downlink (Downlink, DL) RS (Reference Signal, reference signal) resource (Resource) is used for determining the first reference time-frequency resource; the first reference downlink RS resource is a downlink RS resource in a first downlink RS resource set, and the first downlink RS resource set includes at least two downlink RS resources; and the K1 time-frequency resources are associated with at least one downlink RS resource in the first downlink RS resource set.

According to one aspect of this application, including:
receiving a first message, the first message indicating the first reference downlink RS resource in the first downlink RS resource set;
where the first message is an RRC (Radio Resource Control, radio resource control) message.

According to one aspect of this application, where the first reference time-frequency resource is an earliest time-frequency resource in the K1 time-frequency resources in time domain.

According to one aspect of this application, where the first reference downlink RS resource is used for determining the given time-frequency resource; the given time-frequency resource is associated with a given downlink RS resource; the given time-frequency resource is one of the K1 time-frequency resources; the given downlink RS resource is one downlink RS resource in the first downlink RS resource set; the given downlink RS resource is different from the first reference downlink RS resource; and the given time-frequency resource is different from the first reference time-frequency resource.

According to one aspect of this application, where the first RNTI depends on K1.

According to one aspect of this application, where the first RNTI depends on K2, and K2 is a maximum value of K1.

According to one aspect of this application, where the first RNTI depends on Q1; and Q1 is a quantity of downlink RS resources included in the first downlink RS resource set.

According to one aspect of this application, where the first RNTI depends on Q2; Q2 is a quantity of downlink RS resources included in a target downlink RS resource set; and the first downlink RS resource set is a subset of the target downlink RS resource set.

According to one aspect of this application, including:
setting a random access type before sending the Preamble on the K1 time-frequency resources;
where the first RNTI depends on the random access type.

This application discloses a method used in a second node for radio communication, including:
receiving a Preamble sent on K1 time-frequency resources, a first reference time-frequency resource being one of the K1 time-frequency resources; and sending first signaling as a response to receiving the Preamble sent on the K1 time-frequency resources, the first signaling being used for scheduling a random access response, and the first signaling being scrambled by a first RNTI;
where each of the K1 time-frequency resources is used for the Preamble; the first RNTI depends on only the first reference time-frequency resource in the K1 time-frequency resources; and K1 is an integer greater than 1.

According to one aspect of this application, where a first reference downlink RS resource is used for determining the first reference time-frequency resource; the first reference downlink RS resource is a downlink RS resource in a first downlink RS resource set, and the first downlink RS resource set includes at least two downlink RS resources; and the K1 time-frequency resources are associated with at least one downlink RS resource in the first downlink RS resource set.

According to one aspect of this application, including:
sending a first message, the first message indicating the first reference downlink RS resource in the first downlink RS resource set;
where the first message is an RRC message.

According to one aspect of this application, where the first reference time-frequency resource is an earliest time-frequency resource in the K1 time-frequency resources in time domain.

According to one aspect of this application, where the first reference downlink RS resource is used for determining the given time-frequency resource; the given time-frequency resource is associated with a given downlink RS resource; the given time-frequency resource is one of the K1 time-frequency resources; the given downlink RS resource is one downlink RS resource in the first downlink RS resource set; the given downlink RS resource is different from the first reference downlink RS resource; and the given time-frequency resource is different from the first reference time-frequency resource.

According to one aspect of this application, where the first RNTI depends on K1.

According to one aspect of this application, where the first RNTI depends on K2, and K2 is a maximum value of K1.

According to one aspect of this application, where the first RNTI depends on Q1; and Q1 is a quantity of downlink RS resources included in the first downlink RS resource set.

According to one aspect of this application, where the first RNTI depends on Q2; Q2 is a quantity of downlink RS resources included in a target downlink RS resource set; and the first downlink RS resource set is a subset of the target downlink RS resource set.

According to one aspect of this application, where a random access type is set before a Preamble is sent on the K1 time-frequency resources, where the first RNTI depends on the random access type.

This application discloses a first node for radio communication, including:
a first processor, configured to: send a Preamble on K1 time-frequency resources, a first reference time-frequency resource being one of the K1 time-frequency resources; and monitor first signaling as a response to sending the Preamble on the K1 time-frequency resources, the first signaling being used for scheduling a random access response, and the first signaling being scrambled by a first RNTI;
where each of the K1 time-frequency resources is used for the Preamble; the first RNTI depends on only the first reference time-frequency resource in the K1 time-frequency resources; and K1 is an integer greater than 1.

This application discloses a second node for radio communication, including:
a second processor, configured to: receive a Preamble sent on K1 time-frequency resources, a first reference time-frequency resource being one of the K1 time-frequency resources; and send first signaling as a response to receiving the Preamble sent on the K1 time-frequency resources, the first signaling being used for scheduling a random access response, and the first signaling being scrambled by a first RNTI;
where each of the K1 time-frequency resources is used for the Preamble; the first RNTI depends on only the first reference time-frequency resource in the K1 time-frequency resources; and K1 is an integer greater than 1.

As an embodiment, compared with the conventional solution, this application has the following advantages:
- . reducing complexity;
- . being compatible with an existing protocol;
- . avoiding monitoring a plurality of RNTIs; and
- . reducing power consumption of the UE.

### BRIEF DESCRIPTION OF THE DRAWINGS

Other features, objectives, and advantages of this application will become more obvious by reading detailed descriptions of non-restrictive embodiments with reference to the following accompanying drawings:
FIG. 1 is a flowchart of transmission of a Preamble and first signaling according to an embodiment of this application;
FIG. 2 is a schematic diagram of a network architecture according to an embodiment of this application;
FIG. 3 is a schematic diagram of an embodiment of a wireless protocol architecture of a user plane and a control plane according to an embodiment of this application;
FIG. 4 is a schematic diagram of a first communication device and a second communication device according to an embodiment of this application;
FIG. 5 is a flowchart of radio signal transmission according to an embodiment of this application;
FIG. 6 is a schematic diagram in which a first reference downlink RS resource in a first downlink RS resource set is used for determining a first reference time-frequency resource according to an embodiment of this application;
FIG. 7 is a flowchart of radio signal transmission according to another embodiment of this application;
FIG. 8 is a schematic diagram in which a first reference time-frequency resource is an earliest time-frequency resource in K1 time-frequency resources in time domain according to an embodiment of this application;
FIG. 9 is a schematic diagram in which a first reference downlink RS resource is used for determining a given time-frequency resource according to an embodiment of this application;
FIG. 10 is a schematic diagram in which a first RNTI depends on at least one of K1, K2, Q1, or Q2 according to an embodiment of this application;
FIG. 11 is a flowchart of radio signal transmission according to still another embodiment of this application;
FIG. 12 is a structural block diagram of a processing apparatus used for a first node according to an embodiment of this application; and
FIG. 13 is a structural block diagram of a processing apparatus used for a second node according to an embodiment of this application.

### DETAILED DESCRIPTION

Technical solutions of this application are further explained in detail with reference to the accompanying drawings below. It should be noted that, the embodiments in this application and features in the embodiments may be combined with each other randomly if there is no conflict.

### Embodiment 1

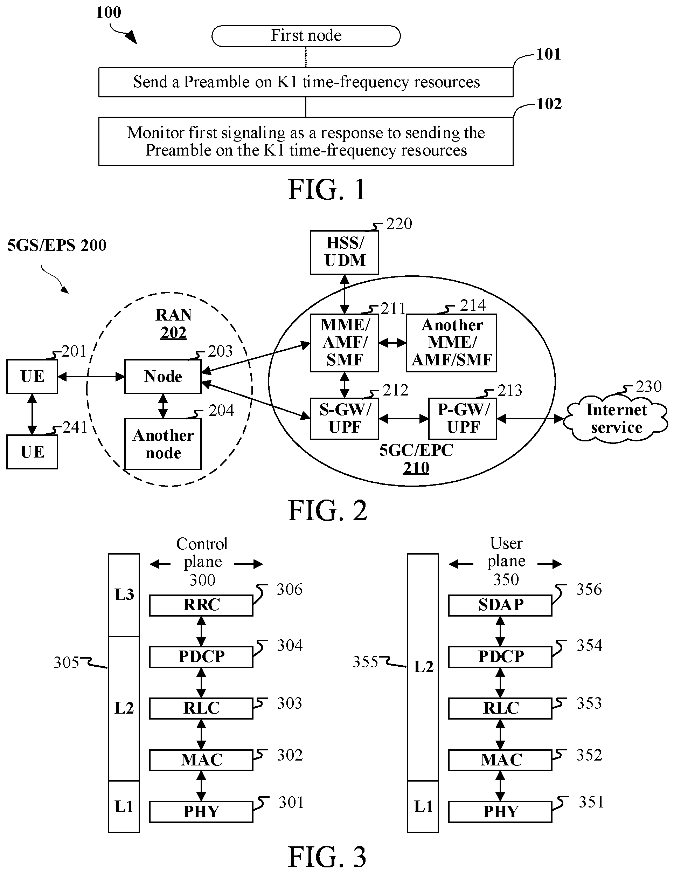

Embodiment 1 illustrates a flowchart of transmission of a Preamble and first signaling according to an embodiment of this application, as shown in FIG. 1. In FIG. 1, each box represents a step. It should be particularly noted that an order of each box in the figure does not represent a time sequence between the represented steps.

In Embodiment 1, in step 101, a first node in this application sends a Preamble on K1 time-frequency resources, and a first reference time-frequency resource is one of the K1 time-frequency resources. In step 102, first signaling is monitored as a response to sending the Preamble on the K1 time-frequency resources, the first signaling is used for scheduling a random access response, and the first signaling is scrambled by a first RNTI. Each of the K1 time-frequency resources is used for the Preamble; the first RNTI depends on only the first reference time-frequency resource in the K1 time-frequency resources; and K1 is an integer greater than 1.

As an embodiment, in a first random access procedure, a Preamble is sent on the K1 time-frequency resources.

As an embodiment, within a time interval at which the Preamble is sent on any two time-frequency resources in the K1 time-frequency resources, PREAMBLE_POWER_RAMPING_COUNTER for the first random access procedure is not increased.

As an embodiment, within a time interval at which the Preamble is sent on any two time-frequency resources in the K1 time-frequency resources, PREAMBLE_TRANSMISSION_COUNTER for the first random access procedure is not increased.

As an embodiment, the first random access procedure is initiated on an SUL (Supplementary Uplink, supplementary uplink).

As an embodiment, the first random access procedure is initiated on an NUL (Normal Uplink, normal uplink).

As an embodiment, the first random access procedure is initiated on an NUL or an SUL.

As an embodiment, the K1 time-frequency resources are used for one PRACH repetition.

As an embodiment, the K1 time-frequency resources are K1 PRACH occasions.

As an embodiment, the K1 time-frequency resources correspond to K1 PRACH occasions.

As an embodiment, any two time-frequency resources in the K1 time-frequency resources do not overlap in time domain.

As an embodiment, any two time-frequency resources in the K1 time-frequency resources overlap in time domain.

As an embodiment, there are at least two time-frequency resources in the K1 time-frequency resources overlapping in time domain.

As an embodiment, whether two time-frequency resources in the K1 time-frequency resources overlap in time domain may be configured.

As an embodiment, any two time-frequency resources in the K1 time-frequency resources are associated with a same downlink RS resource.

As an embodiment, any two time-frequency resources in the K1 time-frequency resources are associated with different downlink RS resources.

As an embodiment, there are at least two time-frequency resources in the K1 time-frequency resources being associated with different downlink RS resources.

As an embodiment, whether downlink RS resources associated with two time-frequency resources in the K1 time-frequency resources are the same may be configured.

As an embodiment, one time-frequency resource is associated with one downlink (DownLink, DSL) RS (Reference Signal, reference signal) resource.

As an embodiment, one downlink RS resource is one SSB (Synchronization Signal Block, synchronization signal block).

As an embodiment, one downlink RS resource is one CSI (Channel State Information, channel state information)-RS (Reference Signal, reference signal).

As an embodiment, one downlink RS resource is one SSB or one CSI-RS.

As an embodiment, one time-frequency resource is configured for one uplink carrier.

As an embodiment, one time-frequency resource is configured for one UL (Uplink, uplink) BWP (Bandwidth Part, bandwidth part).

As an embodiment, a PRACH occasion of one time-frequency resource in time domain is related to one downlink RS resource.

As an embodiment, a PRACH occasion of one time-frequency resource in time domain is related to one reference downlink RS resource.

As an embodiment, one time-frequency resource is configured for at least one Preamble.

As an embodiment, one time-frequency resource is reserved for one Preamble.

As an embodiment, one time-frequency resource is reserved for one transmission of one Preamble.

As an embodiment, one time-frequency resource includes one Preamble.

As an embodiment, one time-frequency resource occupies one PRACH occasion in time domain.

As an embodiment, one time-frequency resource occupies a plurality of REs (Resource Element, resource element) in time-frequency domain.

As an embodiment, one time-frequency resource includes a time domain resource and a frequency domain resource.

As an embodiment, one time-frequency resource includes a time domain resource, a frequency domain resource, and a code domain resource.

As an embodiment, one time-frequency resource includes a time domain resource, a frequency domain resource, a space domain resource, and a code domain resource.

As an embodiment, one time-frequency resource includes a time domain resource used for one Preamble.

As an embodiment, one time-frequency resource includes a frequency domain resource used for one Preamble.

As an embodiment, one time-frequency resource includes a space domain resource used for one Preamble.

As an embodiment, the frequency domain resource includes a BWP.

As an embodiment, the frequency domain resource includes an uplink carrier.

As an embodiment, the time domain resource includes a PRACH occasion (Occasion).

As an embodiment, the time domain resource includes an OFDM (Orthogonal Frequency Division Multiplexing, orthogonal frequency division multiplexing) symbol.

As an embodiment, the time domain resource includes a slot.

As an embodiment, the time domain resource includes a subframe.

As an embodiment, the behavior of sending a Preamble on K1 time-frequency resources includes: indicating a physical layer to send the Preamble on the K1 time-frequency resources.

As an embodiment, the behavior of sending a Preamble on K1 time-frequency resources includes: A MAC sublayer of the first node indicates a physical layer of the first node to send the Preamble on the K1 time-frequency resources.

As an embodiment, the behavior of sending a Preamble on K1 time-frequency resources includes: sending the Preamble on each of the K1 time-frequency resources.

As an embodiment, the behavior of sending a Preamble on K1 time-frequency resources includes: sending the Preamble on at least a first time-frequency resource in the K1 time-frequency resources.

As an embodiment, the Preamble is sent on at least the first reference time-frequency resource.

As an embodiment, the Preamble is not sent on the first reference time-frequency resource.

As an embodiment, the K1 time-frequency resources are used for sending at most K1 Preambles.

As an embodiment, the K1 time-frequency resources are used for determining sending occasions of at most K1 Preambles.

As an embodiment, the K1 time-frequency resources are used for sending K1 Preambles.

As an embodiment, the K1 time-frequency resources are used for determining sending occasions of the K1 Preambles.

As an embodiment, each of the K1 time-frequency resources is reserved for a Preamble.

As an embodiment, each of the K1 time-frequency resources is used for sending a Preamble.

As an embodiment, each of the K1 time-frequency resources can be used for sending a Preamble.

As an embodiment, each of the K1 time-frequency resources is configured for Preamble transmission.

As an embodiment, each of the K1 time-frequency resources is used for a same Preamble.

As an embodiment, each of the K1 time-frequency resources is used for at least two different Preambles.

As an embodiment, any two Preambles sent on the K1 time-frequency resources are generated based on a same sequence.

As an embodiment, root sequences of any two Preambles sent on the K1 time-frequency resources are the same.

As an embodiment, indexes (index) of any two Preambles sent on the K1 time-frequency resources are the same.

As an embodiment, there are two time-frequency resources in the K1 time-frequency resources, and Preambles sent on the two time-frequency resources are generated based on different sequences.

As an embodiment, there are two time-frequency resources in the K1 time-frequency resources, and root sequences of Preambles sent on the two time-frequency resources are different.

As an embodiment, there are two time-frequency resources in the K1 time-frequency resources, and indexes of Preambles sent on the two time-frequency resources are different.

As an embodiment, any two Preambles sent on the K1 time-frequency resources are a same Preamble.

As an embodiment, Preambles sent on any two time-frequency resources in the K1 time-frequency resources are the same.

As an embodiment, there are two time-frequency resources in the K1 time-frequency resources, and Preambles sent on the two time-frequency resources are different.

As an embodiment, if two time-frequency resources in the K1 time-frequency resources are configured for a same downlink RS resource, Preambles sent on the two time-frequency resources are the same; and if two time-frequency resources in the K1 time-frequency resources are configured for two different downlink RS resources, Preambles sent on the two time-frequency resources are different.

As an embodiment, regardless of whether two time-frequency resources in the K1 time-frequency resources are configured for a same downlink RS resource or two different downlink RS resources, Preambles sent on the two time-frequency resources are the same.

As an embodiment, regardless of whether two time-frequency resources in the K1 time-frequency resources are configured for a same downlink RS resource or two different downlink RS resources, Preambles sent on the two time-frequency resources are different.

As an embodiment, any two Preambles sent on the K1 time-frequency resources indicate a same PRACH repetition.

As an embodiment, any two Preambles sent on the K1 time-frequency resources indicate a same random access attempt.

As an embodiment, K1 is a limited value.

As an embodiment, K1 is configurable.

As an embodiment, K1 is preconfigured.

As an embodiment, K1 is determined by the first node.

As an embodiment, K1 is determined based on at least RSRP (Reference signal received power, reference signal received power).

As an embodiment, K1 is not greater than K2, and K2 is a positive integer.

As an embodiment, K2 is a maximum value of K1, and K2 is configurable.

As an embodiment, K2 is a maximum value of K1, and K2 is fixed.

As an embodiment, K2 is a maximum value of K1, and K2 is a default value.

As an embodiment, K2 is a maximum value of K1, and K2 is preconfigured.

As an embodiment, K2 is a maximum quantity of PRACH repetitions.

As an embodiment, K2 is a maximum quantity of PRACH repetitions.

As an embodiment, K2 is configured.

As an embodiment, K2 is not configured.

As an embodiment, in the first random access procedure, K1 is determined.

As an embodiment, in the first random access procedure, K2 is determined, and K1 is determined in K2.

As an embodiment, the phrase of being as a response to sending the Preamble on the K1 time-frequency resources includes: being as a response to sending the Preamble on the first time-frequency resource in the K1 time-frequency resources.

As an embodiment, the phrase of being as a response to sending the Preamble on the K1 time-frequency resources includes: being as a response to sending the Preamble on a last time-frequency resource in the K1 time-frequency resources.

As an embodiment, the phrase of being as a response to sending the Preamble on the K1 time-frequency resources includes: being as a response to sending the Preamble on each of the K1 time-frequency resources.

As an embodiment, the phrase of being as a response to sending the Preamble on the K1 time-frequency resources includes: being as a response to sending the Preamble on one of the K1 time-frequency resources.

As an embodiment, the first signaling is transmitted on a PDCCH.

As an embodiment, the first signaling is one PDCCH transmission.

As an embodiment, the first signaling is DCI (Downlink control information, downlink control information).

As an embodiment, the first signaling is one piece of DCI, and a format of the first signaling is DCI format 1_0.

As an embodiment, the first signaling is for a random access response.

As an embodiment, the first signaling is DCI scrambled by a first RNTI.

As an embodiment, the first signaling is used for scheduling a PDSCH (Physical downlink shared channel, physical downlink shared channel).

As an embodiment, after the Preamble is sent on any of the K1 time-frequency resources, the first signaling is monitored.

As a sub-embodiment of this embodiment, any RA-RNTI other than the first RNTI is not used for monitoring a random access response for the Preamble sent on the K1 time-frequency resources.

As a sub-embodiment of this embodiment, any MSGB-RNTI other than the first RNTI is not used for monitoring a random access response for the Preamble sent on the K1 time-frequency resources.

As a sub-embodiment of this embodiment, at least one RA-RNTI other than the first RNTI is used for monitoring a random access response for the Preamble sent on the K1 time-frequency resources.

As a sub-embodiment of this embodiment, at least one MSGB-RNTI other than the first RNTI is used for monitoring a random access response for the Preamble sent on the K1 time-frequency resources.

As an embodiment, after the Preamble is sent on the first reference time-frequency resource in the K1 time-frequency resources, the first signaling is started to be monitored.

As an embodiment, after the Preamble is sent on an earliest time-frequency resource in the K1 time-frequency resources in time domain, the first signaling is started to be monitored.

As an embodiment, after a first Preamble is sent on the K1 time-frequency resources, the first signaling is started to be monitored.

As an embodiment, after each Preamble is sent on the K1 time-frequency resources, the first signaling is monitored.

As an embodiment, after the Preamble is sent on a last time-frequency resource in the K1 time-frequency resources, the first signaling is started to be monitored.

As an embodiment, the behavior of monitoring the first signaling includes: monitoring the first signaling in a first time window.

As a sub-embodiment of this embodiment, the first signaling is monitored during running of the first time window.

As a sub-embodiment of this embodiment, the first signaling is monitored only during running of the first time window.

As a sub-embodiment of this embodiment, an expiration moment of the first time window is later than an end moment of the last time-frequency resource in the K1 time-frequency resources.

As a sub-embodiment of this embodiment, a start moment of the first time window is related to an end moment of the first reference time-frequency resource.

As a sub-embodiment of this embodiment, a start moment of the first time window is related to an end moment of a first time-frequency resource in the K1 time-frequency resources.

As a sub-embodiment of this embodiment, a start moment of the first time window is related to an end moment of a last time-frequency resource in the K1 time-frequency resources.

As a sub-embodiment of this embodiment, the first time window is a time window.

As a sub-embodiment of this embodiment, the first time window is used for monitoring a random access response.

As a sub-embodiment of this embodiment, the first time window is a time window for monitoring a random access response.

As a sub-embodiment of this embodiment, the first time window includes a positive integer quantity of slots (slot).

As a sub-embodiment of this embodiment, the first time window includes a positive integer quantity of subframes (subframe).

As a sub-embodiment of this embodiment, the first time window includes a positive integer quantity of milliseconds (millisecond).

As a sub-embodiment of this embodiment, a name of the first time window is ra-ResponseWindow.

As a sub-embodiment of this embodiment, a name of the first time window includes ra-Response Window.

As a sub-embodiment of this embodiment, a name of the first time window includes at least one of ra-ResponseWindow, Msg1 (Message 1, message 1), PRACH, or Repetition.

As an embodiment, the first signaling is monitored in a first search space.

As a sub-embodiment of this embodiment, the first search space is a search space.

As a sub-embodiment of this embodiment, the first search space is not ra-SearchSpace.

As a sub-embodiment of this embodiment, the first search space is dedicated to PRACH repetition.

As a sub-embodiment of this embodiment, the first search space is not dedicated to PRACH repetition.

As a sub-embodiment of this embodiment, the first search space is ra-SearchSpace.

As a sub-embodiment of this embodiment, a name of the first search space is ra-SearchSpace.

As a sub-embodiment of this embodiment, a name of the first search space includes ra-SearchSpace.

As a sub-embodiment of this embodiment, a name of the first search space includes at least one of ra-SearchSpace, Msg1, PRACH, or Repetition.

As an embodiment, the phrase that the first signaling is used for scheduling a random access response includes: a PDSCH scheduled by the first signaling is used for carrying at least a random access response.

As an embodiment, the phrase that the first signaling is used for scheduling a random access response includes: a PDSCH scheduled by the first signaling is used for carrying a random access response.

As an embodiment, the phrase that the first signaling is used for scheduling a random access response includes: the first signaling indicates at least one of a time domain position, a frequency domain position, an RV (Redundancy Version, redundancy version), an MCS (Modulation and Coding Scheme, modulation and coding scheme), or an NDI (New Data Indicator, new data indicator) of the random access response.

As an embodiment, the random access response scheduled by the first signaling is a random access response for a Preamble sent on at least one time-frequency resource in the K1 time-frequency resources.

As an embodiment, the random access response scheduled by the first signaling is a random access response for a Preamble sent on any time-frequency resource in the K1 time-frequency resources.

As an embodiment, the random access response scheduled by the first signaling is a random access response for a Preamble sent on the first reference time-frequency resource.

As an embodiment, the random access response is a MAC PDU (Protocol Data Unit, protocol data unit).

As an embodiment, the random access response includes a MAC CE (Control Element, control element).

As an embodiment, the random access response includes a MAC RAR (Random Access Response, random access response).

As an embodiment, the random access response includes a MAC subheader (subheader).

As an embodiment, the random access response is a MAC subPDU.

As an embodiment, the random access response includes a first RAPID (Random Access Preamble IDentifier) field, and the first RAPID field includes a random access preamble identifier (Random Access Preamble identifier); the random access preamble identifier in the first RAPID field matches (match) an identifier of a Preamble sent on at least one time-frequency resource in the K1 time-frequency resources; and Preambles sent on at least two time-frequency resources in the K1 time-frequency resources are different.

As a sub-embodiment of this embodiment, the random access preamble identifier in the first RAPID field matches an identifier of a Preamble sent on the first reference time-frequency resource.

As a sub-embodiment of this embodiment, the random access preamble identifier in the first RAPID field matches an identifier of any Preamble sent on the first reference time-frequency resource.

As an embodiment, the random access response includes a first RAPID field, and a random access preamble identifier in the first RAPID field matches an identifier of a Preamble sent on the K1 time-frequency resources. Preambles sent on any two time-frequency resources in the K1 time-frequency resources are the same.

As an embodiment, the matching means being the same or equal.

As an embodiment, the matching means related or corresponding.

As an embodiment, the random access response is a MAC subPDU, and the MAC subPDU includes at least one MAC subheader.

As an embodiment, the random access response is a MAC subPDU, the MAC subPDU includes only one MAC subheader, and the MAC subheader includes the first RAPID field.

As an embodiment, the random access response is a MAC subPDU, the MAC subPDU includes only one MAC subheader, and the MAC subheader includes the first BI (Backoff Indicator) field.

As an embodiment, the random access response is a MAC subPDU, the MAC subPDU includes a MAC (Medium Access Control, medium access control) subheader (subheader) and a MAC RAR, and the MAC subheader includes the first RAPID field.

As an embodiment, the random access response includes a first BI field, and the first BI field indicates an overload condition (overload condition) of a cell.

As an embodiment, CRC (Cyclic Redundancy Check, cyclic redundancy check) of the first signaling is scrambled by the first RNTI.

As an embodiment, the first signaling is identified by the first RNTI.

As an embodiment, the first signaling carries the first RNTI.

As an embodiment, the first RNTI is used only for a random access response.

As an embodiment, the first RNTI is used for at least a random access response.

As an embodiment, the first RNTI is used only for monitoring or receiving a random access response.

As an embodiment, the first RNTI is used for at least monitoring or receiving a random access response.

As an embodiment, the first RNTI is a bit string.

As an embodiment, the first RNTI is an integer.

As an embodiment, the first RNTI is a positive integer.

As an embodiment, the first RNTI is a non-negative integer.

As an embodiment, the first RNTI is an RNTI.

As an embodiment, the first RNTI is not a C-RNTI.

As an embodiment, the first RNTI is an RA-RNTI.

As an embodiment, the first RNTI is an integer not less than 0001 (hexadecimal) and not greater than FFF2 (hexadecimal).

As an embodiment, a candidate of the first RNTI is not less than 26881.

As an embodiment, a candidate of the first RNTI is not greater than 35840.

As an embodiment, a candidate of the first RNTI is not greater than 44800.

As an embodiment, a candidate of the first RNTI is not greater than 44800.

As an embodiment, a candidate of the first RNTI is not less than 26881 and not greater than 35840.

As an embodiment, a candidate of the first RNTI is not less than 26881 and not greater than 44800.

As an embodiment, the first processor calculates the first RNTI based on the first reference time-frequency resource.

As an embodiment, the first processor calculates, with the behavior of indicating a physical layer to send the Preamble on the K1 time-frequency resources, the first RNTI based on the first reference time-frequency resource.

As a sub-embodiment of this embodiment, the phrase that with the behavior of indicating a physical layer to send the Preamble on the K1 time-frequency resources includes: before the behavior of indicating a physical layer to send the Preamble on the K1 time-frequency resources.

As a sub-embodiment of this embodiment, the phrase that with the behavior of indicating a physical layer to send the Preamble on the K1 time-frequency resources includes: in a case of the behavior of indicating a physical layer to send the Preamble on the K1 time-frequency resources.

As a sub-embodiment of this embodiment, the phrase that with the behavior of indicating a physical layer to send the Preamble on the K1 time-frequency resources includes: after the behavior of indicating a physical layer to send the Preamble on the K1 time-frequency resources.

As an embodiment, the K1 time-frequency resources include at least the first reference time-frequency resource.

As an embodiment, the first reference time-frequency resource (first reference time-frequency resource) is any time-frequency resource in the K1 time-frequency resources.

As an embodiment, the first reference time-frequency resource is an earliest time-frequency resource in the K1 time-frequency resources in time domain.

As an embodiment, the first RNTI depends on a time domain position of only the first reference time-frequency resource in the K1 time-frequency resources.

As an embodiment, the first RNTI depends on a frequency domain position of only the first reference time-frequency resource in the K1 time-frequency resources.

As an embodiment, the first RNTI does not depend on any time-frequency resource in the K1 time-frequency resources other than the first reference time-frequency resource.

As an embodiment, only the first reference time-frequency resource in the K1 time-frequency resources is used for calculating the first RNTI.

As an embodiment, only the first reference time-frequency resource in the K1 time-frequency resources is used for determining the first RNTI.

As an embodiment, any time-frequency resource in the K1 time-frequency resources other than the first reference time-frequency resource is not used for determining the first RNTI.

As an embodiment, any time-frequency resource in the K1 time-frequency resources other than the first reference time-frequency resource is not used for calculating the first RNTI.

As an embodiment, the first RNTI depends on at least one of s_id, t_id, f_id, or ul_carrier_id.

As an embodiment, the first RNTI is related to at least one of s_id, t_id, f_id, or ul_carrier_id.

As an embodiment, the first RNTI is related to s_id, t_id, f_id, and ul_carrier_id.

As an embodiment, the first RNTI is unrelated to at least one of s_id, t_id, f_id, or ul_carrier_id.

As a sub-embodiment of this embodiment, the first RNTI is unrelated to ul_carrier_id.

As an attached embodiment of the sub-embodiment, for PRACH repetition, an uplink carrier used for random access preamble transmission is an NUL.

As an attached embodiment of the sub-embodiment, for PRACH repetition, an uplink carrier used for random access preamble transmission is an SUL.

As a sub-embodiment of this embodiment, the first RNTI is unrelated to f_id.

As an embodiment, s_id, t_id, f_id, and ul_carrier_id are related to only the first reference time-frequency resource in the K1 time-frequency resources.

As an embodiment, that s_id, t_id, f_id, and ul_carrier_id are related to only the first reference time-frequency resource in the K1 time-frequency resources is used for determining that the first RNTI depends on only the first reference time-frequency resource in the K1 time-frequency resources.

As an embodiment, s_id, t_id, f_id, and ul_carrier_id depend on the first reference time-frequency resource.

As an embodiment, s_id, t_id, f_id, and ul_carrier_id are for the first reference time-frequency resource.

As an embodiment, s_id, t_id, f_id, and ul_carrier_id are determined based on the first reference time-frequency resource.

As an embodiment, s_id is related to a time domain position of the first reference time-frequency resource.

As an embodiment, s_id is related to an OFDM symbol occupied by the first reference time-frequency resource.

As an embodiment, s_id is related to a first OFDM symbol occupied by the first reference time-frequency resource.

As an embodiment, s_id is an index of a first OFDM symbol (the index of the first OFDM symbol) of the first reference time-frequency resource.

As an embodiment, s_id is not less than 0, and s_id is less than 14.

As an embodiment, s_id is not less than 0, and s_id is less than 7.

As an embodiment, t_id is related to a time domain position of the first reference time-frequency resource.

As an embodiment, t_id is related to a position of the first reference time-frequency resource in a system frame.

As an embodiment, t_id is related to a relationship between a slot occupied by the first reference time-frequency resource and a system frame.

As an embodiment, t_id is an index of a first slot of the first reference time-frequency resource in a system frame (the index of the first slot of the first reference time-frequency resource in a system frame).

As an embodiment, µ = {0, 1, 2, 3} is used for determining subcarrier spacing of t_id based on a value of µ in section 5.3.2 of TS 38.211. For µ = {5, 6}, t_id is an index of a 120 kHz slot in a system frame that contains the first reference time-frequency resource (the index of the 120 kHz slot in a system frame that contains the first reference time-frequency resource).

As an embodiment, t_id is not less than 0, and s_id is less than 80.

As an embodiment, t_id is not less than 0, and s_id is less than 40.

As an embodiment, f_id is an index of the first reference time-frequency resource in frequency domain (the index of the first reference time-frequency resource in the frequency domain).

As an embodiment, f_id is not less than 0, and s_id is less than 8.

As an embodiment, f_id is not less than 0, and s_id is less than 6.

As an embodiment, f_id is not less than 0, and s_id is less than 4.

As an embodiment, ul_carrier_id indicates a UL carrier used for random access preamble transmission (the UL carrier used for Random Access Preamble transmission).

As an embodiment, if ul_carrier_id is equal to 0, an uplink (Uplink, UL) carrier used for random access preamble transmission is an NUL carrier; and if ul_carrier_id is equal to 1, the uplink carrier used for random access preamble transmission is an SUL carrier.

As an embodiment, the first RNTI depends on at least one of K1, K2, Q1, or Q2.

As an embodiment, the first RNTI does not depend on any one of K1, K2, Q1, or Q2.

As an embodiment, the first RNTI is related to a type of the first random access procedure.

As an embodiment, the first RNTI depends on the first offset.

As an embodiment, a calculation formula of the first RNTI includes the first offset.

As an embodiment, the first offset is used for calculating the first RNTI.

As an embodiment, the first offset depends on at least one of K1, K2, Q1, or Q2.

As an embodiment, the first offset is related to at least one of K1, K2, Q1, or Q2.

As an embodiment, the first offset does not depend on at least one of K1, K2, Q1, or Q2.

As an embodiment, the first offset depends on PRACH repetition.

As an embodiment, the first offset is related to PRACH repetition.

As an embodiment, the first RNTI depends on the first offset only in PRACH repetition.

As an embodiment, the PRACH repetition is used for determining that the first RNTI depends on the first offset.

As an embodiment, the first offset is a constant.

As an embodiment, the first offset is variable.

As an embodiment, the first offset is of a fixed value.

As an embodiment, the first offset is default.

As an embodiment, the first offset is equal to a maximum value of (1 + s_id + 14 × t_id + 14 × 80 × f_id + 14 × 80 × 8 × ul_carrier_id + 14 × 80 × 8 × 2).

As an embodiment, the first offset is not less than a maximum value of (1 + s_id + 14 × t_id + 14 × 80 × f_id + 14 × 80 × 8 × ul_carrier_id + 14 × 80 × 8 × 2).

As an embodiment, the first offset is equal to 35840.

As an embodiment, the first offset is equal to 17920.

As an embodiment, the first offset is related to 14 × 80 × 8.

As a sub-embodiment of this embodiment, the first offset is linearly related to 14 × 80 × 8.

As a sub-embodiment of this embodiment, the first offset is equal to (14 × 80 × 8 × M1).

As a sub-embodiment of this embodiment, the first offset is M1 times of 14 × 80 × 8, and M1 is a positive number.

As a sub-embodiment of this embodiment, the first offset = 14 × 80 × 8 × M1.

As a sub-embodiment of this embodiment, the first offset = 14 × 80 × 8 × 2 + 14 × 80 × 8 × M2; and M2 is equal to (M1-2).

As a sub-embodiment of this embodiment, the first offset = 14 × 80 × 8 × 2 × M2; and M2 is equal to (M1/2).

As a sub-embodiment of this embodiment, M1 is greater than 2.

As a sub-embodiment of this embodiment, M1 is greater than 3.

As a sub-embodiment of this embodiment, M1 is equal to 4.

As an embodiment, the first RNTI is related to s_id, t_id, f_id, and ul_carrier_id; and the first RNTI depends on the first offset.

As an embodiment, the first RNTI depends on at least one of s_id, t_id, f_id, or ul_carrier_id; the first RNTI is unrelated to at least one of s_id, t_id, f_id, or ul_carrier_id; and the first RNTI depends on the first offset.

As an embodiment, the first RNTI is equal to (1 + s_id + 14 × t_id + 14 × 80 × f_id + 14 × 80 × 8 × ul_carrier_id + first offset); the first RNTI is related to s_id, t_id, f_id, and ul_carrier_id; and the first RNTI depends on the first offset.

As an embodiment, the first RNTI is equal to (1 + s_id + 14 × t_id + 14 × 80 × f_id + 14 × 80 × 8 × ul_carrier_id + 14 × 80 × 8 × 4).

As an embodiment, the first RNTI is equal to (1 + s_id + 14 × t_id + 14 × 80 × f_id + first offset); the first RNTI is unrelated to ul_carrier_id; and the first RNTI depends on the first offset.

As an embodiment, the first RNTI is equal to (1 + s_id + 14 × t_id + 14 × 80 × f_id + 14 × 80 × 8 × 4).

As an embodiment, the first RNTI is related to s_id, t_id, f_id, and ul_carrier_id; and the first RNTI does not depend on the first offset.

As an embodiment, the first RNTI is related to s_id, t_id, f_id, and ul_carrier_id; and the first RNTI does not depend on any one of K1, K2, Q1, or Q2.

As an embodiment, the first RNTI is equal to (1 + s_id + 14 × t_id + 14 × 80 × f_id + 14 × 80 × 8 × ul_carrier_id); and the first RNTI is related to s_id, t_id, f_id, and ul_carrier_id.

As an embodiment, the first RNTI is equal to (1 + s_id + 14 × t_id + 14 × 80 × f_id + 14 × 80 × 8 × ul_carrier_id + 14 × 80 × 8 × 2); and the first RNTI is related to s_id, t_id, f_id, and ul_carrier_id.

As an embodiment, the PRACH repetition includes: Msg1 (Message 1, message 1) repetition.

As an embodiment, the PRACH repetition includes: RACH repetition.

As an embodiment, the PRACH repetition includes: sending a plurality of PRACHs in one random access attempt.

As an embodiment, the PRACH repetition includes: sending a plurality of PRACHs between two updates of PREAMBLE_TRANSMISSION_COUNTER.

As an embodiment, the PRACH repetition includes: sending a plurality of PRACHs between two updates of PREAMBLE_POWER_RAMPING_COUNTER.

As an embodiment, the PRACH repetition includes: a plurality of consecutive PRACHs.

### Embodiment 2

Embodiment 2 illustrates a schematic diagram of a network architecture according to an embodiment of this application, as shown in FIG. 2. FIG. 2 shows a network architecture 200 of a 5G NR (New Radio, new radio)/LTE (Long-Term Evolution, long-term evolution)/LTE-A (Long-Term Evolution Advanced, long-term evolution advanced) system. The 5G NR/LTE/LTE-A network architecture 200 may be referred to as a 5GS (5G System)/EPS (Evolved Packet System, evolved packet system) 200, or some other proper terms. The 5GS/EPS 200 includes at least one of a UE (User Equipment, user equipment) 201, an RAN (radio access network) 202, a 5GC (5G Core Network, 5G core network)/EPC (Evolved Packet Core, evolved packet core) 210, an HSS (Home Subscriber Server, home subscriber server)/UDM (Unified Data Management, unified data management) 220, and an Internet service 230. The 5GS/EPS may be interconnected to other access networks, but for simplicity, these entities/interfaces are not shown. As shown in the figure, the 5GS/EPS provides a packet switching service. However, persons skilled in the art will easily understand that various concepts presented throughout this application may be extended to a network providing a circuit switch service or another cellular network. The RAN includes a node 203 and another node 204. The node 203 provides user and control plane termination by agreement towards the UE 201. The node 203 may be connected to another node 204 via an Xn interface (for example, a backhaul)/X2 interface. The node 203 may also be referred to as a base station, a base transceiver station, a radio base station, a radio transceiver, a transceiver function, a basic service set (BSS), an extended service set (ESS), a TRP (transmitter receiver point), or some other proper terms. The node 203 provides an access point to the 5GC/EPC 210 for the UE 201. An example of the UE 201 includes a cellular phone, a smartphone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrow band Internet of Things device, a machine-type communication device, land transportation, an automobile, a wearable device, or any other similar functional apparatus. Persons skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other proper terms. The node 203 is connected to the 5GC/EPC 210 via an S1/NG interface. The 5GC/EPC 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Date Network Gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, Internet Protocol) packets are delivered by using the S-GW/UPF 212, and the S-GW/UPF 212 is connected to the P-GW/UPF 213. The P-GW provides UE IP address assignment and other functions. The P-GW/UPF 213 is connected to the Internet service 230. The Internet service 230 includes an Internet Protocol service corresponding to an operator, and may specifically include the Internet, an intranet, an IMS (IP Multimedia Subsystem, IP multimedia subsystem), and a packet switching streaming service.

As an embodiment, the UE 201 corresponds to the first node in this application.

As an embodiment, the UE 201 is user equipment (User Equipment, UE).

As an embodiment, the UE 201 is a base station (Base Station, BS).

As an embodiment, the UE 201 is a relay device.

As an embodiment, the node 203 corresponds to the second node in this application.

As an embodiment, the node 203 is a base station.

As an embodiment, the node 203 is user equipment.

As an embodiment, the node 203 is a relay device.

As an embodiment, the node 203 is a gateway (Gateway).

Typically, the UE 201 is user equipment, and the node 203 is a base station.

As an embodiment, the user equipment supports transmission in a terrestrial network (Terrestrial Network, terrestrial network).

As an embodiment, the user equipment supports transmission in a non-terrestrial network (Non-Terrestrial Network, NTN).

As an embodiment, the user equipment supports transmission in a network with a large delay difference.

As an embodiment, the user equipment supports dual connection (Dual Connection, DC) transmission.

As an embodiment, the user equipment includes an aircraft.

As an embodiment, the user equipment includes an in-vehicle terminal.

As an embodiment, the user equipment includes a watercraft.

As an embodiment, the user equipment includes a terminal in an Internet of Things.

As an embodiment, the user equipment includes a terminal in an industrial Internet of Things.

As an embodiment, the user equipment includes a device supporting low-delay high-reliability transmission.

As an embodiment, the user equipment includes a test device.

As an embodiment, the user equipment includes a signaling tester.

As an embodiment, the base station includes a base transceiver station (Base Transceiver Station, BTS).

As an embodiment, the base station includes a NodeB (NodeB, NB).

As an embodiment, the base station includes a gNB.

As an embodiment, the base station includes an eNB.

As an embodiment, the base station includes an ng-eNB.

As an embodiment, the base station includes an en-gNB.

As an embodiment, the base station supports transmission in a non-terrestrial network.

As an embodiment, the base station supports transmission in a network with a large delay difference.

As an embodiment, the base station supports transmission in a terrestrial network.

As an embodiment, the base station includes a macro cellular (Marco Cellular) base station.

As an embodiment, the base station includes a micro cell (Micro Cell) base station.

As an embodiment, the base station includes a pico cell (Pico Cell) base station.

As an embodiment, the base station includes a home base station (Femtocell).

As an embodiment, the base station includes a base station supporting a large delay difference.

As an embodiment, the base station includes a flight platform device.

As an embodiment, the base station includes a satellite device.

As an embodiment, the base station includes a TRP (Transmitter Receiver Point, transmitter receiver point).

As an embodiment, the base station includes a CU (Centralized Unit, centralized unit).

As an embodiment, the base station includes a DU (Distributed Unit, distributed unit).

As an embodiment, the base station includes a test device.

As an embodiment, the base station includes a signaling tester.

As an embodiment, the base station includes an IAB (Integrated Access and Backhaul)-node.

As an embodiment, the base station includes an IAB-donor.

As an embodiment, the base station includes an IAB-donor-CU.

As an embodiment, the base station includes an IAB-donor-DU.

As an embodiment, the base station includes an IAB-DU.

As an embodiment, the base station includes an IAB-MT.

As an embodiment, the relay device includes a relay.

As an embodiment, the relay device includes an L3 relay.

As an embodiment, the relay device includes an L2 relay.

As an embodiment, the relay device includes a router.

As an embodiment, the relay device includes a switch.

As an embodiment, the relay device includes user equipment.

As an embodiment, the relay device includes a base station.

### Embodiment 3

Embodiment 3 shows a schematic diagram of an embodiment of a wireless protocol architecture of a user plane and a control plane according to this application, as shown in FIG. 3. FIG. 3 is a schematic diagram of an embodiment of a radio protocol architecture used for a user plane 350 and a control plane 300. FIG. 3 presents the radio protocol architecture used for the control plane 300 by using three layers: layer 1, layer 2, and layer 3. Layer 1 (L1 layer) is a lowest layer at which various PHY (physical layer) signal processing functions are implemented. The L1 layer is referred to as a PHY 301 in this specification. Layer 2 (L2 layer) 305 is above the PHY 301, and includes a MAC (Media Access Control, media access control) sublayer 302, an RLC (Radio Link Control, radio link control) sublayer 303, and a PDCP (Packet Data Convergence Protocol, packet data convergence protocol) sublayer 304. The PDCP sublayer 304 provides multiplexing between different radio bearers and logical channels. The PDCP sublayer 304 further provides security by encrypting a data packet, and provides inter-cell mobility support. The RLC sublayer 303 provides segmentation and reassembly of an upper-layer data packet, retransmission of a lost data packet, and rearrangement of a data packet, to compensate for unordered reception caused by a HARQ (Hybrid Automatic Repeat Request, hybrid automatic repeat request). The MAC sublayer 302 provides multiplexing between a logical channel and a transmission channel. The MAC sublayer 302 is further responsible for allocating various radio resources (for example, resource blocks) in a cell. The MAC sublayer 302 is further responsible for a HARQ operation. An RRC (Radio Resource Control, radio resource control) sublayer 306 in layer 3 (L3 layer) in the control plane 300 is responsible for obtaining a radio resource (that is, a radio bearer) and configuring a lower layer by using RRC signaling. A radio protocol architecture of the user plane 350 includes layer 1 (L1 layer) and layer 2 (L2 layer). The radio protocol architecture in the user plane 350 is basically the same as a corresponding layer and a sublayer in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer packets, to reduce radio transmission overheads. The L2 layer 355 in the user plane 350 further includes an SDAP (Service Data Adaptation Protocol, service data adaptation protocol) sublayer 356, and the SDAP sublayer 356 is responsible for mapping between a QoS flow and a data radio bearer (DRB, Data Radio Bearer), to support diversity of services.

As an embodiment, the wireless protocol architecture in FIG. 3 is applicable to the first node in this application.

As an embodiment, the wireless protocol architecture in FIG. 3 is applicable to the second node in this application.

As an embodiment, in this application, each Preamble sent on the K1 time-frequency resources is generated from the PHY 301 or the PHY 351.

As an embodiment, the first signaling in this application is generated from the MAC 302 or the MAC 352.

As an embodiment, the first signaling in this application is generated from the PHY 301 or the PHY 351.

As an embodiment, the second signaling in this application is generated from the MAC 302 or the MAC 352.

As an embodiment, the second signaling in this application is generated from the PHY 301 or the PHY 351.

As an embodiment, the first message in this application is generated from the RRC 306.

As an embodiment, the first message in this application is generated from the MAC 302 or the MAC 352.

As an embodiment, the first message in this application is generated from the PHY 301 or the PHY 351.

### Embodiment 4

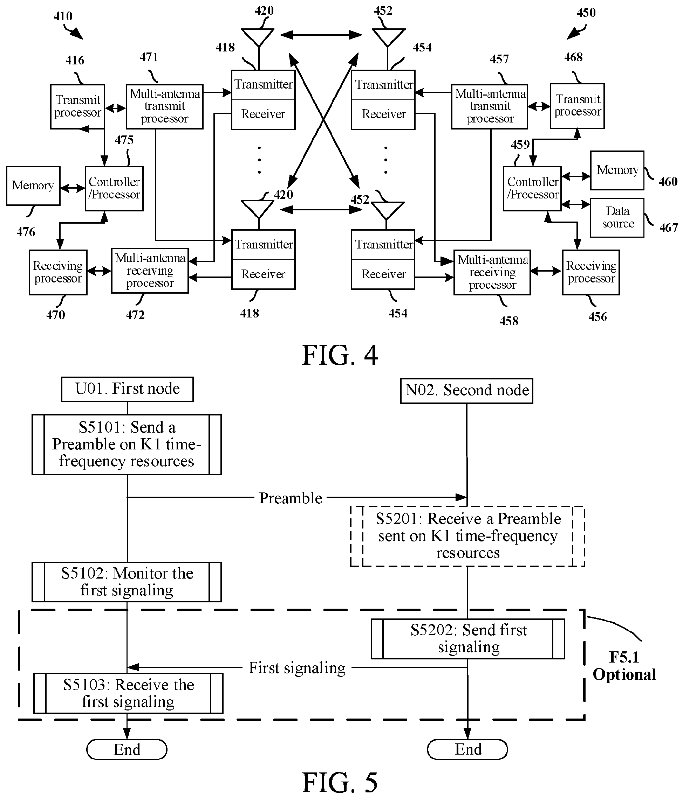

Embodiment 4 shows a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receiving processor 456, a multi-antenna transmit processor 457, a multi-antenna receiving processor 458, a transmitter/receiver 454, and an antenna 452.

The second communication device 410 includes a controller/processor 475, a memory 476, a receiving processor 470, a transmit processor 416, a multi-antenna receiving processor 472, a multi-antenna transmit processor 471, a transmitter/receiver 418, and an antenna 420.

During transmission from the second communication device 410 to the first communication device 450, at the second communication device 410, an upper-layer data packet from a core network is provided for the controller/processor 475. The controller/processor 475 implements functionality of the L2 layer. During transmission from the second communication device 410 to the first communication device 450, the controller/processor 475 provides header compression, encryption, packet segmentation and reordering, multiplexing between logical and transmission channels, and radio resource allocation to the first communication device 450 based on various priority measures. The controller/processor 475 is further responsible for retransmission of a lost packet and signaling to the first communication device 450. The transmit processor 416 and the multi-antenna transmit processor 471 implement various signal processing functions for the L1 layer (that is, the physical layer). The transmit processor 416 implements coding and interleaving to promote forward error correction (FEC) at the second communication device 410, and mapping of a signal cluster based on various modulation schemes (for example, binary phase shift keying (BPSK), quadrature phase shift keying (QPSK), M-phase shift keying (M-PSK), and M-quadrature amplitude modulation (M-QAM)). The multi-antenna transmit processor 471 performs digital space precoding on coded and modulated symbols, including codebook-based precoding and non-codebook-based precoding, and beam forming processing, to generate one or more spatial flows. The transmit processor 416 subsequently maps each spatial flow to a subcarrier, multiplexes the spatial flow with a reference signal (for example, a pilot) in time domain and/or frequency domain, and then uses inverse fast Fourier transform (IFFT) to generate a physical channel carrying a time domain multi-carrier symbol stream. Subsequently, the multi-antenna transmit processor 471 performs a sending analog precoding/beam forming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the second communication device 410 to the first communication device 450, at the first communication device 450, each receiver 454 receives a signal through a corresponding antenna 452. Each receiver 454 recovers information modulated onto a radio frequency carrier, converts a radio frequency stream into a baseband multi-carrier symbol stream, and provides the baseband multi-carrier symbol stream for the receiving processor 456. The receiving processor 456 and the multi-antenna receiving processor 458 implement various signal processing functions of the L1 layer. The multi-antenna receiving processor 458 performs a receiving analog precoding/beam forming operation on a baseband multi-carrier symbol stream from the receiver 454. The receiving processor 456 converts, from time domain to frequency domain by using fast Fourier transform (FFT), the baseband multi-carrier symbol stream on which the receiving analog precoding/beam forming operation is performed. In frequency domain, a data signal and a reference signal at the physical layer are demultiplexed by the receiving processor 456, where the reference signal is used for channel estimation, and after multi-antenna detection is performed on the data signal in the multi-antenna receiving processor 458, any spatial flow that uses the first communication device 450 as a destination is recovered. A symbol in each spatial flow is demodulated and recovered in the receiving processor 456, and a soft decision is generated. Subsequently, the receiving processor 456 decodes and deinterleaves the soft decision to recover the upper-layer data and the control signal transmitted by the second communication device 410 on the physical channel. Subsequently, the upper-layer data and the control signal are provided for the controller/processor 459. The controller/processor 459 implements a function of the L2 layer. The controller/processor 459 may be associated with the memory 460 that stores program code and data. The memory 460 may be referred to as a computer readable medium. During transmission from the second communication device 410 to the second communication device 450, the controller/processor 459 provides demultiplexing, packet reassembly, decryption, header decompression, and control signal processing between transmission and logical channels, to recover an upper-layer data packet from the core network. Subsequently, the upper-layer data packet is provided for all protocol layers above the L2 layer. Various control signals may alternatively be provided for L3 for L3 processing.

During transmission from the first communication device 450 to the second communication device 410, the data source 467 is used at the first communication device 450 to provide the upper-layer data packet for the controller/processor 459. The data source 467 indicates all protocol layers above the L2 layer. Similar to a sending function at the second communication device 410 described in transmission from the second communication device 410 to the first communication device 450, the controller/processor 459 implements, based on radio resource allocation, header compression, encryption, packet segmentation and reordering, and multiplexing between logical and transmission channels, and implements a function of an L2 layer for a user plane and a control plane. The controller/processor 459 is further responsible for retransmission of a lost packet and signaling to the second communication device 410. The transmit processor 468 performs modulation mapping and channel coding processing. The multi-antenna transmit processor 457 performs digital multi-antenna space precoding, including codebook-based precoding and non-codebook-based precoding, and beam forming processing. Subsequently, the transmit processor 468 modulates a generated spatial flow into a multi-carrier/single-carrier symbol stream. The multi-carrier/single-carrier symbol stream on which an analog precoding/beam forming operation is performed in the multi-antenna transmit processor 457 is provided by the transmitter 454 for different antennas 452. Each transmitter 454 first converts a baseband symbol stream provided by the multi-antenna transmit processor 457 into a radio frequency symbol stream, and then provides the radio frequency symbol stream for the antenna 452.

During transmission from the first communication device 450 to the second communication device 410, a function at the second communication device 410 is similar to a receiving function at the first communication device 450 described during transmission from the second communication device 410 to the first communication device 450. Each receiver 418 receives a radio frequency signal through a corresponding antenna 420, converts the received radio frequency signal into a baseband signal, and provides the baseband signal for the multi-antenna receiving processor 472 and the receiving processor 470. The receiving processor 470 and the multi-antenna receiving processor 472 jointly implement a function of the L1 layer. The controller/processor 475 implements a function of the L2 layer. The controller/processor 475 may be associated with the memory 476 that stores program code and data. The memory 476 may be referred to as a computer readable medium. During transmission from the first communication device 450 to the second communication device 410, the controller/processor 475 provides demultiplexing, packet reassembly, decryption, header decompression, and control signal processing between transmission and logical channels, to recover an upper-layer data packet from UE 450. The upper-layer data packet from the controller/processor 475 may be provided for the core network.

As an embodiment, the first communication device 450 includes: at least one processor and at least one memory, and the at least one memory includes computer program code; the at least one memory and the computer program code are configured to be used with the at least one processor, and the first communication device 450 at least: sending a Preamble on K1 time-frequency resources, a first reference time-frequency resource being one of the K1 time-frequency resources; and monitoring first signaling as a response to sending the Preamble on the K1 time-frequency resources, the first signaling being used for scheduling a random access response, and the first signaling being scrambled by a first RNTI, where each of the K1 time-frequency resources is used for the Preamble; the first RNTI depends on only the first reference time-frequency resource in the K1 time-frequency resources; and K1 is an integer greater than 1.

As an embodiment, the first communication device 450 includes: a memory storing a program of computer readable instructions, the program of computer readable instructions generating an action when being executed by at least one processor, and the action including: sending a Preamble on K1 time-frequency resources, a first reference time-frequency resource being one of the K1 time-frequency resources; and monitoring first signaling as a response to sending the Preamble on the K1 time-frequency resources, the first signaling being used for scheduling a random access response, and the first signaling being scrambled by a first RNTI, where each of the K1 time-frequency resources is used for the Preamble; the first RNTI depends on only the first reference time-frequency resource in the K1 time-frequency resources; and K1 is an integer greater than 1.

As an embodiment, the second communication device 410 includes: at least one processor and at least one memory, and the at least one memory includes computer program code; and the at least one memory and the computer program code are configured to be used with the at least one processor. The second communication device 410 at least: receiving a Preamble sent on K1 time-frequency resources, a first reference time-frequency resource being one of the K1 time-frequency resources; and sending first signaling as a response to receiving the Preamble sent on the K1 time-frequency resources, the first signaling being used for scheduling a random access response, and the first signaling being scrambled by a first RNTI, where each of the K1 time-frequency resources is used for the Preamble; the first RNTI depends on only the first reference time-frequency resource in the K1 time-frequency resources; and K1 is an integer greater than 1.

As an embodiment, the second communication device 410 includes: a memory storing a program of computer readable instructions, the program of computer readable instructions generating an action when being executed by at least one processor, and the action including: receiving a Preamble sent on K1 time-frequency resources, a first reference time-frequency resource being one of the K1 time-frequency resources; and sending first signaling as a response to receiving the Preamble sent on the K1 time-frequency resources, the first signaling being used for scheduling a random access response, and the first signaling being scrambled by a first RNTI, where each of the K1 time-frequency resources is used for the Preamble; the first RNTI depends on only the first reference time-frequency resource in the K1 time-frequency resources; and K1 is an integer greater than 1.

As an embodiment, the antenna 452, the receiver 454, the receiving processor 456, and the controller/processor 459 are configured to monitor or receive first signaling.

As an embodiment, at least one of the antenna 420, the transmitter 418, the transmit processor 416, and the controller/processor 475 is configured to send first signaling.

As an embodiment, the antenna 452, the receiver 454, the receiving processor 456, and the controller/processor 459 are configured to monitor or receive second signaling.

As an embodiment, at least one of the antenna 420, the transmitter 418, the transmit processor 416, and the controller/processor 475 is configured to send second signaling.

As an embodiment, the antenna 452, the receiver 454, the receiving processor 456, and the controller/processor 459 are configured to receive a first message.

As an embodiment, at least one of the antenna 420, the transmitter 418, the transmit processor 416, and the controller/processor 475 is configured to send a first message.

As an embodiment, the antenna 452, the transmitter 454, the transmit processor 468, and the controller/processor 459 are configured to send a Preamble on the K1 time-frequency resources.

As an embodiment, at least one of the antenna 420, the receiver 418, the receiving processor 470, and the controller/processor 475 is configured to receive a Preamble sent on the K1 time-frequency resources.

As an embodiment, the first communication device 450 corresponds to the first node in this application.

As an embodiment, the second communication device 410 corresponds to the second node in this application.

As an embodiment, the first communication device 450 is user equipment.

As an embodiment, the first communication device 450 is user equipment supporting a large delay difference.

As an embodiment, the first communication device 450 is user equipment supporting an NTN.

As an embodiment, the first communication device 450 is an aircraft device.

As an embodiment, the first communication device 450 has a capability of position.

As an embodiment, the first communication device 450 does not have a capability of position.

As an embodiment, the first communication device 450 is user equipment supporting a TN.

As an embodiment, the second communication device 410 is a base station (gNB/eNB/ng-eNB).

As an embodiment, the second communication device 410 is a base station supporting a large delay difference.

As an embodiment, the second communication device 410 is a base station supporting an NTN.

As an embodiment, the second communication device 410 is a satellite device.

As an embodiment, the second communication device 410 is a flight platform device.

As an embodiment, the second communication device 410 is a base station supporting a TN.

### Embodiment 5

Embodiment 5 illustrates a flowchart of radio signal transmission according to an embodiment of this application, as shown in FIG. 5. It should be particularly noted that a sequence in this example does not limit a signal transmission sequence and an implementation sequence in this application.

For a **first node U01,** in step S5101, a Preamble is sent on K1 time-frequency resources, and a first reference time-frequency resource is one of the K1 time-frequency resources; in step S5102, first signaling is monitored as a response to sending the Preamble on the K1 time-frequency resources, the first signaling is used for scheduling a random access response, and the first signaling is scrambled by a first RNTI; and in step S5103, the first signaling is received.

For a **second node N02,** in step S5201, the Preamble sent on the K1 time-frequency resources is received; and in step S5202, the first signaling is sent.

In Embodiment 5, each of the K1 time-frequency resources is used for the Preamble; the first RNTI depends on only the first reference time-frequency resource in the K1 time-frequency resources; and K1 is an integer greater than 1.

As an embodiment, the first node U01 is user equipment.

As an embodiment, the first node U01 is a base station.

As an embodiment, the first node U01 is a relay device.

As an embodiment, the second node N02 is a base station.

As an embodiment, the second node N02 is user equipment.

As an embodiment, the second node N02 is a relay device.

As an embodiment, the second node N02 includes one TRP.

As an embodiment, the second node N02 includes two TRPs.

As an embodiment, the second node N02 includes at least two TRPs.

As an embodiment, the first node U01 is user equipment, and the second node N02 is a base station.

As an embodiment, the first node U01 is user equipment, and the second node N02 is a relay device.

As an embodiment, the first node U01 is user equipment, and the second node N02 is user equipment.

As an embodiment, the first node U01 is a base station, and the second node N02 is a base station.

As an embodiment, the first node U01 is a relay device, and the second node N02 is a base station.

As an embodiment, the first node U01 and the second node N02 are connected by using a uu interface.

As an embodiment, the first node U01 and the second node N02 are connected by using an Xn interface.

As an embodiment, the first node U01 and the second node N02 are connected by using an X2 interface.

As an embodiment, the first node U01 and the second node N02 are connected by using a PC5 interface.

As an embodiment, the first node U01 and the second node N02 are connected by using an air interface.

As an embodiment, receivers of any two Preambles sent on the K1 time-frequency resources are a same TRP of the second node N02.

As an embodiment, there are receivers of two Preambles in Preambles sent on the K1 time-frequency resources being different TRPs of the second node N02.

As an embodiment, in step S5101, a maximum of K1 Preambles are sent.

As an embodiment, in step S5101, K1 Preambles are sent.

As an embodiment, in step S5101, less than K1 Preambles are sent.

As an embodiment, step S5201 is optional.

As an embodiment, step S5201 exists, and the second node N02 receives at least one Preamble sent on the K1 time-frequency resources.

As a sub-embodiment of this embodiment, the second node N02 receives each Preamble sent on the K1 time-frequency resources.

As a sub-embodiment of this embodiment, the second node N02 receives only one Preamble sent on the K1 time-frequency resources.

As an embodiment, step S5201 does not exist; and the second node N02 does not receive any Preamble sent on the K1 time-frequency resources.

As an embodiment, a dotted box F5.1 is optional.

As an embodiment, at least one step in a dotted box F5.1 exists.

As a sub-embodiment of this embodiment, the first signaling is sent by the second node N02, and the first signaling is received by the first node U01.

As an attached embodiment of this sub-embodiment, after a Preamble is sent on each of the K1 time-frequency resources, the first signaling is received.

As an attached embodiment of this sub-embodiment, after a Preamble is sent on at least one time-frequency resource of the K1 time-frequency resources, the first signaling is received.

As a sub-embodiment of this embodiment, the first signaling is sent by the second node N02, and the first signaling is not received by the first node U01.

As an embodiment, none step in a dotted box F5.1 exists.

As a sub-embodiment of this embodiment, the first signaling is not sent by the second node N02, and the first signaling is not received by the first node U01.

As an embodiment, that the first signaling is not received by the first node U01 means that: during running of the first time window, the first signaling is not received by the first node U01.

As an embodiment, that the first signaling is not received by the first node U01 means that: the first signaling is not received by the first node U01 when the first time window expires.

As an embodiment, that the first signaling is not received by the first node U01 means that: the first signaling is not successfully received by the first node U01.

As an embodiment, that the first signaling is received by the first node U01 means that: the first signaling is received by the first node U01 during running of the first time window.

As an embodiment, that the first signaling is received by the first node U01 means that: the first signaling is successfully received by the first node U01.

### Embodiment 6

Embodiment 6 illustrates a schematic diagram in which a first reference downlink RS resource in a first downlink RS resource set is used for determining a first reference time-frequency resource according to an embodiment of this application. It should be particularly noted that in this example, a quantity of downlink RS resources included in the first downlink RS resource set is not limited, an order of the first reference downlink RS resource in the first downlink RS resource set is not limited, and a size of an index of each downlink RS resource is not limited.

In Embodiment 6, the first reference downlink RS resource is used for determining the first reference time-frequency resource; the first reference downlink RS resource is a downlink RS resource in a first downlink RS resource set, and the first downlink RS resource set includes at least two downlink RS resources; and the K1 time-frequency resources are associated with at least one downlink RS resource in the first downlink RS resource set.

As an embodiment, the first reference downlink RS resource is a downlink RS resource.

As an embodiment, the first reference downlink RS resource is a reference downlink RS resource.

As an embodiment, the first reference downlink RS resource is used for determining at least one time-frequency resource.

As an embodiment, the first reference downlink RS resource is used for determining the first reference time-frequency resource.

As an embodiment, the first reference time-frequency resource is associated with the first reference downlink RS resource.

As an embodiment, the first reference time-frequency resource is a time-frequency resource configured for the first reference downlink RS resource.

As an embodiment, the first reference time-frequency resource is a time-frequency resource associated with the first reference downlink RS resource.

As an embodiment, the first reference time-frequency resource is determined based on the first reference downlink RS resource.

As an embodiment, the first reference time-frequency resource is a time-frequency resource that is associated with the first reference downlink RS resource and that is in the K1 time-frequency resources.

As an embodiment, the first reference time-frequency resource is an earliest time-frequency resource in the K1 time-frequency resources in time domain.

As an embodiment, the K1 time-frequency resources are determined based on each downlink RS resource in the first downlink RS resource set.

As an embodiment, the K1 time-frequency resources are determined in the K2 time-frequency resources based on each downlink RS resource in the first downlink RS resource set.

As an embodiment, a Preamble sent on the K1 time-frequency resources and the first downlink RS resource set are configured for a same PRACH repetition.

As an embodiment, a Preamble sent on the K1 time-frequency resources is associated with the first downlink RS resource set.

As an embodiment, a Preamble sent on the K1 time-frequency resources indicates the first downlink RS resource set.

As an embodiment, a Preamble sent on the first reference time-frequency resource indicates the first reference downlink RS resource.

As an embodiment, the first reference time-frequency resource is configured for the first reference downlink RS resource.

As an embodiment, no time-frequency resource in the K1 time-frequency resources is configured for the first reference downlink RS resource.

As an embodiment, the K1 time-frequency resources are associated with the first downlink RS resource set.

As an embodiment, the K1 time-frequency resources are configured for the first downlink RS resource set.

As an embodiment, the K1 time-frequency resources are associated with only one downlink RS resource in the first downlink RS resource set.

As an embodiment, the K1 time-frequency resources are associated with only the first reference downlink RS resource in the first downlink RS resource set.

As an embodiment, the K1 time-frequency resources are associated with a plurality of downlink RS resources in the first downlink RS resource set.

As an embodiment, the K1 time-frequency resources are associated with each downlink RS resource in the first downlink RS resource set.

As an embodiment, each of the K1 time-frequency resources is associated with one or more downlink RS resources in the first downlink RS resource set.

As an embodiment, the K1 time-frequency resources are associated with at least the first reference downlink RS resource.

As an embodiment, the K1 time-frequency resources are associated with each downlink RS resource in the first downlink RS resource set.

As an embodiment, each of the K1 time-frequency resources is one of K2 time-frequency resources.

As a sub-embodiment of this embodiment, the K1 time-frequency resources are K1 consecutive time-frequency resources in the K2 time-frequency resources in time domain.

As a sub-embodiment of this embodiment, the K1 time-frequency resources are K1 randomly selected time-frequency resources in the K2 time-frequency resources.

As a sub-embodiment of this embodiment, no time-frequency resource in the K2 time-frequency resources is included between any two time-frequency resources in the K1 time-frequency resources.

As a sub-embodiment of this embodiment, there are at least two consecutive time-frequency resources in the K1 time-frequency resources in time domain, and at least one time-frequency resource in the K2 time-frequency resources is included between the two consecutive time-frequency resources in time domain.

As a sub-embodiment of this embodiment, K1 is a quantity of PRACH repetitions.

As a sub-embodiment of this embodiment, K2 is a maximum value for which the quantity of PRACH repetitions is allowed.

As a sub-embodiment of this embodiment, K2 is a maximum value of K1.

As a sub-embodiment of this embodiment, the K2 time-frequency resources are associated with the first downlink RS resource set.

As a sub-embodiment of this embodiment, the K2 time-frequency resources are associated with only one downlink RS resource in the first downlink RS resource set.

As a sub-embodiment of this embodiment, the K2 time-frequency resources are associated with only the first downlink RS resource in the first downlink RS resource set.

As a sub-embodiment of this embodiment, the K2 time-frequency resources are associated with a plurality of downlink RS resources in the first downlink RS resource set.

As a sub-embodiment of this embodiment, the K2 time-frequency resources are associated with each downlink RS resource in the first downlink RS resource set.

As a sub-embodiment of this embodiment, each of the K2 time-frequency resources is associated with one or more downlink RS resources in the first downlink RS resource set.

As a sub-embodiment of this embodiment, one or more time-frequency resources in the K2 time-frequency resources are configured for each downlink RS resource in the first downlink RS resource set.

As a sub-embodiment of this embodiment, K1 is equal to K2.

As a sub-embodiment of this embodiment, K1 is less than K2.

As a sub-embodiment of this embodiment, K1 is not greater than K2.

As an embodiment, the first reference downlink RS resource is a reference downlink RS resource in the first downlink RS resource set.

As an embodiment, one or more time-frequency resources in the K1 time-frequency resources are configured for each downlink RS resource in the first downlink RS resource set.

As an embodiment, one or more time-frequency resources in the K2 time-frequency resources are configured for each downlink RS resource in the first downlink RS resource set.

As an embodiment, there are two downlink RS resources in the first downlink RS resource set belonging to two different TRPs.

As an embodiment, two downlink RS resources in the first downlink RS resource set are configured for cells identified by different PCIs (Physical cell identifier, physical cell identifier).

As an embodiment, before a Preamble is sent on the K1 time-frequency resources, at least the first reference downlink RS resource is determined.

As an embodiment, the first reference downlink RS resource is used for determining the first downlink RS resource set.

As an embodiment, the first reference downlink RS resource is determined in a random access resource selection process of the first random access procedure.

As an embodiment, before a Preamble is sent on the K1 time-frequency resources, the first downlink RS resource set is determined.

As an embodiment, the first downlink RS resource set is used for determining the first reference downlink RS resource.

As an embodiment, the first downlink RS resource set is determined in a random access resource selection process of the first random access procedure.

As an embodiment, only a measurement result for the first reference downlink RS resource in the first downlink RS resource set is used for random access resource selection.

As an embodiment, the first reference downlink RS resource is a downlink RS resource whose measurement result is higher than an RSRP threshold.

As an embodiment, a measurement result for any downlink RS resource in the first downlink RS resource set is used for random access resource selection.

As an embodiment, a measurement result of any downlink RS resource in the first downlink RS resource set is higher than an RSRP threshold.

As an embodiment, a measurement result for each downlink RS resource in the first downlink RS resource set is used for random access resource selection.

As an embodiment, a measurement result of each downlink RS resource in the first downlink RS resource set is higher than an RSRP threshold.

As an embodiment, an average value of measurement results of all downlink RS resources in the first downlink RS resource set is higher than an RSRP threshold.

As an embodiment, the measurement result is an SS (Synchronization Signal, synchronization signal)-RSRP, and the first reference downlink RS resource is an SSB.

As an embodiment, the measurement result is a CSI-RSRP, and the first reference downlink RS resource is a CSI-RS.

As an embodiment, the measurement result is an L1 (Layer 1) measurement result.

As an embodiment, the measurement result is based on unfiltered L1-RSRP measurement.

As an embodiment, the RSRP threshold may be configured.

As an embodiment, one RRC field is used for configuring the RSRP threshold.

As an embodiment, a name of an RRC field used for configuring the RSRP threshold includes rsrp-ThresholdSSB.

As an embodiment, a name of an RRC field used for configuring the RSRP threshold includes rsrp-ThresholdCSI-RS.

As an embodiment, a quantity of downlink RS resources included in the first downlink RS resource set is Q1.

As an embodiment, Q1 is equal to K1.

As an embodiment, Q1 is not equal to K1.

As an embodiment, the first downlink RS resource set includes K1 downlink RS resources, and the K1 time-frequency resources are respectively associated with the K1 downlink RS resources.

As an embodiment, any two downlink RS resources in the first downlink RS resource set are different.

As an embodiment, indexes of any two downlink RS resources in the first downlink RS resource set are different.

As an embodiment, any two downlink RS resources in the first downlink RS resource set are of different types, and a type of a downlink RS resource is an SSB or a CSI-RS.

As an embodiment, any two downlink RS resources in the first downlink RS resource set are of different types or different indexes.

As an embodiment, the first downlink RS resource set is a subset of a target downlink RS resource set. A quantity of downlink RS resources included in the target downlink RS resource set is Q2.

As an embodiment, each downlink RS resource in the first downlink RS resource set is a downlink RS resource in the target downlink RS resource set.

As an embodiment, the first downlink RS resource set is determined in the target downlink RS resource set.

As an embodiment, the first downlink RS resource set is randomly selected from the target downlink RS resource set.

As an embodiment, the first downlink RS resource set is determined in the target downlink RS resource set based on at least an RSRP.

As an embodiment, Q1 is equal to Q2.

As an embodiment, Q1 is less than Q2.

As an embodiment, Q1 is not greater than Q2.

As an embodiment, the K2 time-frequency resources are associated with the target downlink RS resource set.

As a sub-embodiment of this embodiment, the K2 time-frequency resources are associated with only one downlink RS resource in the target downlink RS resource set.

As a sub-embodiment of this embodiment, the K2 time-frequency resources are associated with only the first downlink RS resource in the target downlink RS resource set.

As a sub-embodiment of this embodiment, the K2 time-frequency resources are associated with a plurality of downlink RS resources in the target downlink RS resource set.

As a sub-embodiment of this embodiment, the K2 time-frequency resources are associated with each downlink RS resource in the target downlink RS resource set.

As a sub-embodiment of this embodiment, each of the K2 time-frequency resources is associated with one or more downlink RS resources in the target downlink RS resource set.

As a sub-embodiment of this embodiment, one or more time-frequency resources in the K2 time-frequency resources are configured for each downlink RS resource in the target downlink RS resource set.

As an embodiment, the first reference downlink RS resource is used for determining an earliest time-frequency resource in the K1 time-frequency resources in time domain.

As an embodiment, the first reference downlink RS resource is used for determining the first reference time-frequency resource, and the first reference time-frequency resource is an earliest time-frequency resource in the K1 time-frequency resources in time domain.

As an embodiment, the first reference downlink RS resource is determined based on at least an RSRP, and the first reference time-frequency resource is determined based on at least the first reference downlink RS resource.

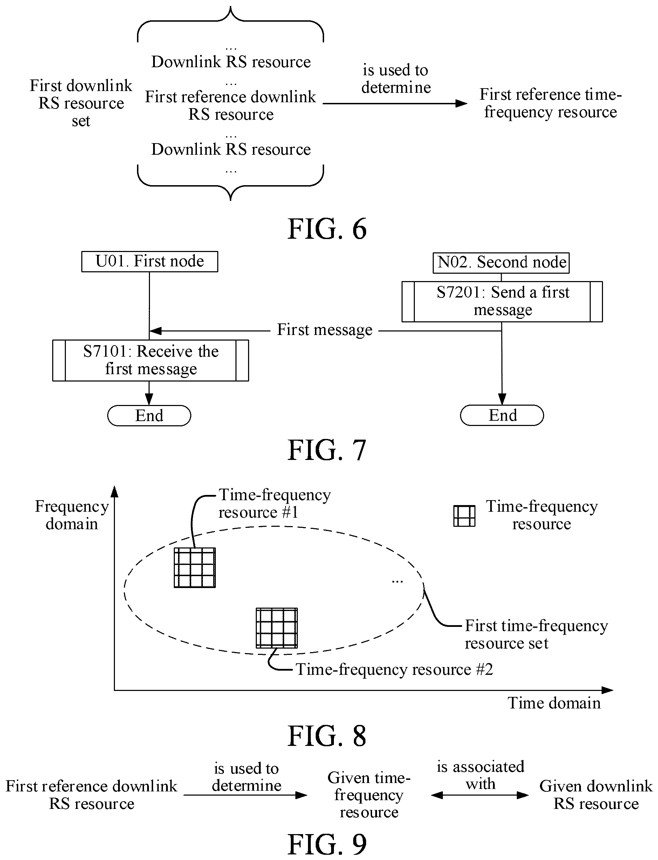

As an embodiment, the ellipsis in FIG. 6 exists.

As an embodiment, the ellipsis in FIG. 6 does not exist.

### Embodiment 7

Embodiment 7 illustrates a flowchart of radio signal transmission according to another embodiment of this application, as shown in FIG. 7. It should be particularly noted that a sequence in this example does not limit a signal transmission sequence and an implementation sequence in this application.

For a **first node U01,** in step S7101, a first message is received, and the first message indicates the first reference downlink RS resource in the first downlink RS resource set.

For a **second node N02,** in step S7201, the first message is sent.

In Embodiment 7, the first message is an RRC message.

As an embodiment, the first message is transmitted through a DCCH (Dedicated Control Channel, dedicated control channel).

As an embodiment, the first message is transmitted through a CCCH (Common Control Channel, common control channel).

As an embodiment, the first message is transmitted through an MCCH (MBS (Multicast/Broadcast Services, multicast/broadcast services) Control Channel, MBS control channel).

As an embodiment, the first message is transmitted through an SCCH (Sidelink Control Channel, sidelink control channel).

As an embodiment, the first message is transmitted through an SBCCH (sidelink broadcast control channel, Sidelink Broadcast Control Channel).

As an embodiment, the first message is an SIB1 (System Information Block, system information block) message.

As an embodiment, the first message is an RRCReconfiguration message.

As an embodiment, the first message is an RRCSetup message.

As an embodiment, the first message is an RRCResume message.

As an embodiment, the first message is an RRCReestablishment message.

As an embodiment, the first message explicitly indicates the first reference downlink RS resource in the first downlink RS resource set.

As an embodiment, the first message implicitly indicates the first reference downlink RS resource in the first downlink RS resource set.

As an embodiment, the first message indicates that the first reference downlink RS resource is a reference downlink RS resource in the first downlink RS resource set.

As an embodiment, a position, in the first message, of an RRC field used for configuring each RS resource in the first downlink RS resource set indicates the first reference downlink RS resource in the first downlink RS resource set.

As an embodiment, an RRC field used for configuring the first reference downlink RS resource is a first RRC field in RRC fields used for configuring RS resources in the first downlink RS resource set.

As an embodiment, an index, in a list, of each RS resource in the first downlink RS resource set indicates the first reference downlink RS resource in the first downlink RS resource set; and the list is configured for the first message.

As an embodiment, an index of the first reference downlink RS resource in a list is not greater than an index, in the list, of any downlink RS resource in the first downlink RS resource set; and the list is configured for the first message.

As an embodiment, the first downlink RS resource set is configured for the list.

As an embodiment, the target downlink RS resource set is configured for the list.

As an embodiment, an index of each RS resource in the first downlink RS resource set indicates the first reference downlink RS resource in the first downlink RS resource set; and an index of each downlink RS resource in the first downlink RS resource set is configured for the first message.

As an embodiment, an index of the first reference downlink RS resource is a smallest index of an RS resource in the first downlink RS resource set; and an index of each downlink RS resource in the first downlink RS resource set is configured for the first message.

As an embodiment, an RRC field in the first message indicates the first reference downlink RS resource in the first downlink RS resource set.

As a sub-embodiment of this embodiment, a value of the RRC field in the first message indicates the first reference downlink RS resource in the first downlink RS resource set.

As a sub-embodiment of this embodiment, the RRC field in the first message is set to "ture" for indicating the first reference downlink RS resource in the first downlink RS resource set.

As a sub-embodiment of this embodiment, the RRC field exists in the first message for indicating the first reference downlink RS resource in the first downlink RS resource set; and The RRC field is for the first reference downlink RS resource.

As an embodiment, the first message is used for configuring the first downlink RS resource set.

As an embodiment, the first message is used for configuring a Preamble associated with the first downlink RS resource set.

As an embodiment, the first message is used for configuring a first Preamble set, the first Preamble set is associated with the first reference downlink RS resource, and the first Preamble set includes at least one Preamble.

As an embodiment, the first message is used for configuring a first Preamble set, the first Preamble set is associated with the first downlink RS resource set, and the first Preamble set includes at least one Preamble.

As an embodiment, the first message is used for configuring a first Preamble set, the first Preamble set is associated with the target downlink RS resource set, and the first Preamble set includes at least one Preamble.

As an embodiment, the first Preamble set includes only one Preamble.

As an embodiment, the first Preamble set includes at least one Preamble.

As an embodiment, the first Preamble set includes at least two Preambles.

As an embodiment, a quantity of Preambles included in the first Preamble set is configurable.

As an embodiment, a quantity of Preambles included in the first Preamble set is not less than a quantity of downlink RS resources included in the first downlink RS resource set.

As an embodiment, any Preamble sent on the K1 time-frequency resources is a Preamble in the first Preamble set.

As an embodiment, the first Preamble set is determined in a random access resource selection process of the first random access procedure.

As an embodiment, the first Preamble set is determined after the first reference downlink RS resource is determined.

As an embodiment, the first Preamble set is determined after the first downlink RS resource set is determined.

As an embodiment, the first Preamble set is determined based on the first reference downlink RS resource.

As an embodiment, the first Preamble set is determined based on at least one downlink RS resource in the first downlink RS resource set.

As an embodiment, the first Preamble set is determined based on each downlink RS resource in the first downlink RS resource set.

As an embodiment, the first Preamble set is determined based on only one downlink RS resource in the first downlink RS resource set.

### Embodiment 8

Embodiment 8 illustrates a schematic diagram in which a first reference time-frequency resource is an earliest time-frequency resource in K1 time-frequency resources in time domain according to an embodiment of this application. In FIG. 8, a horizontal axis represents a time domain, a vertical axis represents a frequency domain, a box filled with a cross represents a time-frequency resource, and an ellipsis represents another time-frequency resource in the first time-frequency resource set.

In Embodiment 8, the first time-frequency resource set includes at least a time-frequency resource #1 and a time-frequency resource #2, the time-frequency resource #1 is a first time-frequency resource in the K1 time-frequency resources, and the time-frequency resource #2 is a second time-frequency resource in the K1 time-frequency resources.

As an embodiment, the ellipsis in FIG. 8 exists.

As an embodiment, the ellipsis in FIG. 8 does not exist.

As an embodiment, the time-frequency resource #1 and the time-frequency resource #2 overlap in time domain.

As an embodiment, the time-frequency resource #1 and the time-frequency resource #2 do not overlap in time domain.

As an embodiment, the time-frequency resource #1 and the time-frequency resource #2 overlap in frequency domain.

As an embodiment, the time-frequency resource #1 and the time-frequency resource #2 do not overlap in frequency domain.

As an embodiment, the time-frequency resource #1 is an earliest time-frequency resource in the K1 time-frequency resources in time domain.

As an embodiment, an earliest time-frequency resource in time domain is a time-frequency resource with an earliest start moment.

As an embodiment, the first reference time-frequency resource is the time-frequency resource #1.

As an embodiment, the first reference time-frequency resource is not the time-frequency resource #1.

As a sub-embodiment of this embodiment, the first reference time-frequency resource is determined based on the first reference downlink RS resource, and the first reference time-frequency resource is not the time-frequency resource #1.

As a sub-embodiment of this embodiment, the first reference time-frequency resource is the time-frequency resource #2.

As a sub-embodiment of this embodiment, the first reference time-frequency resource is a time-frequency resource after the time-frequency resource #2.

### Embodiment 9

Embodiment 9 illustrates a schematic diagram in which a first reference downlink RS resource is used for determining a given time-frequency resource according to an embodiment of this application, as shown in FIG. 9.

In Embodiment 9, the first reference downlink RS resource is used for determining the given time-frequency resource; the given time-frequency resource is associated with a given downlink RS resource; the given time-frequency resource is one of the K1 time-frequency resources; the given downlink RS resource is one downlink RS resource in the first downlink RS resource set; the given downlink RS resource is different from the first reference downlink RS resource; and the given time-frequency resource is different from the first reference time-frequency resource.

As an embodiment, the given time-frequency resource is configured for the first reference downlink RS resource.

As an embodiment, the given time-frequency resource is based on

As an embodiment, the first reference downlink RS resource is used for determining the first reference time-frequency resource, and the first reference time-frequency resource is used for determining the given time-frequency resource.

As an embodiment, the given time-frequency resource and the first reference time-frequency resource are consecutive in time domain.

As an embodiment, the given time-frequency resource and the first reference time-frequency resource are not consecutive in time domain.

As an embodiment, the given time-frequency resource is a time-frequency resource that is in the K1 time-frequency resources and that is immediately following the first reference time-frequency resource in time domain.

As an embodiment, the given time-frequency resource is a next time-frequency resource adjacent to the first reference time-frequency resource in the K1 time-frequency resources.

As an embodiment, the given time-frequency resource is any time-frequency resource in the K1 time-frequency resources other than the first reference time-frequency resource.

As an embodiment, an end moment of the first reference time-frequency resource in time domain is used for determining a start moment of the given time-frequency resource.

As an embodiment, a symbol after the end moment of the first reference time-frequency resource in time domain is a start moment of the given time-frequency resource.

As an embodiment, the given time-frequency resource is configured for the given downlink RS resource.

As an embodiment, a Preamble sent on the given time-frequency resource is associated with the given downlink RS resource.

As an embodiment, a Preamble sent on the given time-frequency resource indicates the given downlink RS resource.

As an embodiment, the phrase that the first reference downlink RS resource is used for determining the given time-frequency resource includes: the first reference downlink RS resource is used for determining a time domain position of the given time-frequency resource.

As an embodiment, the phrase that the first reference downlink RS resource is used for determining the given time-frequency resource includes: the first reference downlink RS resource is used for determining the first reference time-frequency resource, and the first reference time-frequency resource is used for determining the given time-frequency resource.

### Embodiment 10

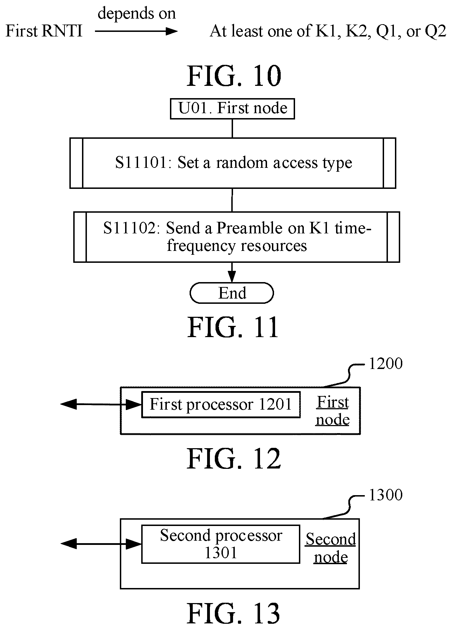

Embodiment 10 illustrates a schematic diagram in which a first RNTI depends on at least one of K1, K2, Q1, or Q2 according to an embodiment of this application, as shown in FIG. 10.

In Embodiment 10, the first RNTI depends on at least one of K1, K2, Q1, or Q2.

As an embodiment, the first RNTI is related to s_id, t_id, f_id, and ul_carrier_id; and the first RNTI depends on at least one of K1, K2, Q1, or Q2.

As an embodiment, the first RNTI depends on at least one of s_id, t_id, f_id, or ul_carrier_id; the first RNTI is unrelated to at least one of s_id, t_id, f_id, or ul_carrier_id; and the first RNTI depends on at least one of K1, K2, Q1, or Q2.

As an embodiment, the first RNTI does not depend on at least one of K1, K2, Q1, or Q2.

As an embodiment, at least one of K1, K2, Q1, or Q2 is used for determining that the first RNTI depends on the first offset.

As an embodiment, K1 being greater than 1 is used for determining that the first RNTI depends on the first offset.

As an embodiment, K2 being greater than 1 is used for determining that the first RNTI depends on the first offset.

As an embodiment, Q1 being greater than 1 is used for determining that the first RNTI depends on the first offset.

As an embodiment, Q2 being greater than 1 is used for determining that the first RNTI depends on the first offset.

As an embodiment, at least one of K1, K2, Q1, or Q2 is used for determining that a Preamble sent on the K1 time-frequency resources indicates PRACH repetition, and the Preamble sent on the K1 time-frequency resources indicates that the PRACH repetition is used for determining that the first RNTI depends on the first offset.

As an embodiment, the first RNTI depends on K1.

As an embodiment, the first RNTI is related to K1.

As an embodiment, the first RNTI is linearly related to K1.

As an embodiment, the first RNTI depends on K2, and K2 is a maximum value of K1.

As an embodiment, the first RNTI depends on K2 only when K2 is greater than 1.

As an embodiment, the first RNTI is related to K2.

As an embodiment, the first RNTI is linearly related to K2.

As an embodiment, the first RNTI depends on Q1; and Q1 is a quantity of downlink RS resources included in the first downlink RS resource set.

As an embodiment, the first RNTI depends on Q1 only when Q1 is greater than 1.

As an embodiment, the first RNTI is related to Q1.

As an embodiment, the first RNTI is linearly related to Q1.

As an embodiment, the first RNTI depends on Q2; and Q2 is a quantity of downlink RS resources included in a target downlink RS resource set; and the first downlink RS resource set is a subset of the target downlink RS resource set.

As an embodiment, the first RNTI depends on Q2 only when Q2 is greater than 1.

As an embodiment, the first RNTI is related to Q2.

As an embodiment, the first RNTI is linearly related to Q2.

As an embodiment, the first offset depends on at least one of K1, K2, Q1, or Q2; and the first RNTI is linearly related to the first offset.

As an embodiment, the first offset depends on at least one of K1, K2, Q1, or Q2; and the first RNTI is related to the first offset.

As an embodiment, that the first offset depends on at least one of K1, K2, Q1, or Q2 is used for determining that the first RNTI depends on at least one of K1, K2, Q1, or Q2.

As an embodiment, the first offset depends on K1.

As an embodiment, the first offset is related to K1.

As an embodiment, the first offset is linearly related to K1.

As an embodiment, the first offset depends on K2.

As an embodiment, the first offset is related to K2.

As an embodiment, the first offset is linearly related to K2.

As an embodiment, the first offset depends on K1 and K2.

As an embodiment, the first offset is related to K1 and K2.

As an embodiment, the first offset depends on Q1.

As an embodiment, the first offset is related to Q1.

As an embodiment, the first offset is linearly related to Q1.

As an embodiment, the first offset depends on Q1 and K2.

As an embodiment, the first offset is related to Q1 and K2.

As an embodiment, the first offset depends on Q2.

As an embodiment, the first offset is related to Q2.

As an embodiment, the first offset is linearly related to Q2.

As an embodiment, the first offset depends on K1 and Q2.

As an embodiment, the first offset is related to K1 and Q2.

As an embodiment, the first offset depends on Q1 and Q2.

As an embodiment, the first offset is related to Q1 and Q2.

As an embodiment, M1 is related to K1.

As an embodiment, M1 is linearly related to K1.

As an embodiment, M1 is equal to K1.

As an embodiment, M1 is equal to K2.

As an embodiment, M1 is linearly related to K2.

As an embodiment, M1 is equal to K2.

As an embodiment, M1 is equal to Q1.

As an embodiment, M1 is linearly related to Q1.

As an embodiment, M1 is equal to Q1.

As an embodiment, M1 is equal to Q2.

As an embodiment, M1 is linearly related to Q2.

As an embodiment, M1 is equal to Q2.

### Embodiment 11

Embodiment 11 illustrates a flowchart of radio signal transmission according to still another embodiment of this application, as shown in FIG. 11. It should be particularly noted that a sequence in this example does not limit a signal transmission sequence and an implementation sequence in this application.

For a **first node U01,** in step S11101, a random access type is set before a Preamble is sent on the K1 time-frequency resources; and in step S11102, a Preamble is sent on the K1 time-frequency resources.

In Embodiment 11, the first RNTI depends on a random access type.

As an embodiment, the behavior of setting a random access type includes: setting RA_TYPE.

As an embodiment, the behavior of setting a random access type includes: setting the random access type to four-step random access.

As an embodiment, the behavior of setting the random access type to four-step random access includes: setting RA_TYPE to 4-stepRA.

As an embodiment, in an initialization stage of the first random access procedure, the random access type is set to four-step random access.

As an embodiment, in the first random access procedure, the random access type is set to four-step random access.

As a sub-embodiment of this embodiment, at an initialization stage of the first random access procedure, the random access type is set to four-step random access.

As a sub-embodiment of this embodiment, at an initialization stage of the first random access procedure, the random access type is set to two-step random access.

As an attached embodiment of the sub-embodiment, PREAMBLE _TRANSMISSION_COUNTER is equal to a threshold and is used for determining to set the random access type to four-step random access.

As an attached embodiment of the sub-embodiment, when the behavior of setting the random access type is executed, PREAMBLE_TRANSMISSION_COUNTER is equal to the threshold.

As an attached embodiment of the sub-embodiment, the threshold is msgA - TransMax + 1.

As an attached embodiment of the sub-embodiment, when PREAMBLE_TRANSMISSION_COUNTER is equal to the threshold, the random access type is set to four-step random access.

As an embodiment, the behavior of setting a random access type includes: setting the random access type to two-step random access.

As an embodiment, the behavior of setting the random access type to two-step random access includes: setting RA_TYPE to 2-stepRA.

As an embodiment, in an initialization stage of the first random access procedure, the random access type is set to two-step random access.

As an embodiment, in the first random access procedure, the random access type is set to two-step random access.

As an embodiment, when the behavior of setting a random access type is executed, PREAMBLE_TRANSMISSION_COUNTER is equal to 1.

As an embodiment, when the behavior of setting a random access type is executed, PREAMBLE_TRANSMISSION_COUNTER is greater than 1.

As an embodiment, whether the first RNTI is related to a second offset depends on a random access type.

As an embodiment, if the random access type is set to two-step random access, the first random access procedure is related to the second offset; and if the random access type is set to four-step random access, the first random access procedure is unrelated to the second offset.

As an embodiment, if the random access type is set to two-step random access, the first random access procedure depends on the second offset; and if the random access type is set to four-step random access, the first random access procedure does not depend on the second offset.

As an embodiment, the second offset is equal to the first offset.

As an embodiment, the second offset is not equal to the first offset.

As an embodiment, the second offset is not greater than the first offset.

As an embodiment, the second offset is less than the first offset.

As an embodiment, the second offset is equal to a maximum value of (1 + s_id + 14 × t_id + 14 × 80 × f_id + 14 × 80 × 8 × ul_carrier_id).

As an embodiment, the second offset is equal to a maximum value of (1 + s_id + 14 × t_id + 14 × 80 × f_id).

As an embodiment, the second offset is equal to a maximum value of (1 + s_id + 14 × t_id + 14 × 80 × f_id + 14 × 80 × 8 × 2).

As an embodiment, the second offset is equal to 8960.

As an embodiment, the second offset is related to 14 × 80 × 8.

As a sub-embodiment of this embodiment, the second offset is linearly related to 14 × 80 × 8.

As a sub-embodiment of this embodiment, the second offset is equal to (14 × 80 × 8 × W1).

As a sub-embodiment of this embodiment, the second offset is W1 times of 14 × 80 × 8, and W1 is a positive number.

As a sub-embodiment of this embodiment, the second offset = 14 × 80 × 8 × W1.

As a sub-embodiment of this embodiment, W1 is an integer.

As a sub-embodiment of this embodiment, W1 is not an integer.

As a sub-embodiment of this embodiment, W1 is equal to 1.

As a sub-embodiment of this embodiment, W1 is equal to 2.

As a sub-embodiment of this embodiment, W1 is equal to 3.

As a sub-embodiment of this embodiment, W1 is equal to 0.25.

As a sub-embodiment of this embodiment, W1 is equal to 0.5.

As a sub-embodiment of this embodiment, W1 is equal to 0.75.

As an embodiment, the first RNTI depends on the first offset and the second offset; and the random access type is set to two-step random access.

As an embodiment, the first RNTI is equal to (1 + s_id + 14 × t_id + 14 × 80 × f_id + 14 × 80 × 8 × ul_carrier_id + first offset + second offset).

As an embodiment, the first RNTI is equal to (1 + s_id + 14 × t_id + 14 × 80 × f_id + 14 × 80 × 8 × ul_carrier_id + 14 × 80 × 8 × 6).

As an embodiment, the first RNTI is equal to (1 + s_id + 14 × t_id + 14 × 80 × f_id + first offset + second offset).

As an embodiment, the first RNTI is equal to (1 + s_id + 14 × t_id + 14 × 80 × f_id + 14 × 80 × 8 × 4 + 14 × 80 × 8).

As an embodiment, if the random access type is set to four-step random access, the first RNTI = 1 + s_id + 14 × t_id + 14 × 80 × f_id + 14 × 80 × 8 × ul_carrier_id; and if the random access type is set to two-step random access, the first RNTI = 1 + s_id + 14 × t_id + 14 × 80 × f_id + 14 × 80 × 8 × ul_carrier _id + 14 × 80 × 8 × 2.

As an embodiment, if the random access type is set to four-step random access, the first RNTI = 1 + s_id + 14 × t_id + 14 × 80 × f_id + 14 × 80 × 8 × ul_carrier_id + first offset; and if the random access type is set to two-step random access, the first RNTI = 1 + s_id + 14 × t_id + 14 × 80 × f_id + 14 × 80 × 8 × ul_carrier_id + first offset + second offset.

As an embodiment, the first RNTI depends on the second offset only when the first RNTI depends on the first offset; and the random access type is set to two-step random access.

As an embodiment, the random access type is set to two-step random access only when the first RNTI does not depend on the first offset and the second offset.

As an embodiment, the first RNTI does not depend on at least one of K1, K2, Q1, or Q2.

As an embodiment, a process in which a Preamble sent on the K1 time-frequency resources is configured for four-step random access is used for determining to set the random access type to four-step random access.

As an embodiment, a process in which a Preamble sent on the K1 time-frequency resources is configured for two-step random access is used for determining to set the random access type to two-step random access.

As an embodiment, if the random access type is set to four-step random access, the first RNTI is equal to (1 + s_id + 14 × t_id + 14 × 80 × f_id + 14 × 80 × 8 × ul_carrier_id); and if the random access type is set to two-step random access, the first RNTI is equal to (1 + s_id + 14 × t_id + 14 × 80 × f_id + 14 × 80 × 8 × ul _carrier id + 14 × 80 × 8 × 2).

As an embodiment, if the random access type is set to four-step random access, the first RNTI is equal to (1 + s_id + 14 × t_id + 14 × 80 × f_id + 14 × 80 × 8 × 4); and if the random access type is set to two-step random access, the first RNTI is equal to (1 + s_id + 14 × t_id + 14 × 80 × f_id + 14 × 80 × 8 × 4 + 14 × 80 × 8).

As an embodiment, if the random access type is set to four-step random access, the first RNTI is equal to (1 + s_id + 14 × t_id + 14 × 80 × f_id + 14 × 80 × 8 × ul_carrier_id + first offset); and if the random access type is set to two-step random access, the first RNTI is equal to (1 + s_id + 14 × t_id + 14 × 80 × f_id + 14 × 80 × 8 × ul_carrier_id + first offset + second offset).

As an embodiment, if the random access type is set to four-step random access, the first RNTI is equal to (1 + s_id + 14 × t_id + 14 × 80 × f_id + first offset); and if the random access type is set to two-step random access, the first RNTI is equal to (1 + s_id + 14 × t_id + 14 × 80 × f_id + first offset + second offset).

As an embodiment, the first random access procedure is a four-step random access procedure.

As an embodiment, the first random access procedure is a two-step random access procedure.

As a sub-embodiment of this embodiment, the random access response is a MAC subPDU, the MAC subPDU includes a MAC (Medium Access Control, medium access control) subheader (subheader) and a FallbackRAR, and the MAC subheader includes the first RAPID field.

As a sub-embodiment of this embodiment, the random access response is a MAC subPDU, the MAC subPDU includes a MAC subheader and a MAC CE, and the MAC subheader includes the first RAPID field.

As a sub-embodiment of this embodiment, the random access response is a MAC CE.

As a sub-embodiment of this embodiment, the random access response is an Absolute Timing Advance Command MAC CE.

As a sub-embodiment of this embodiment, the first RNTI is an MSGB (Message B, message B)-RNTI.

As a sub-embodiment of this embodiment, a name of the first time window is msgB-ResponseWindow.

As a sub-embodiment of this embodiment, a name of the first time window includes msgB-Response Window.

As a sub-embodiment of this embodiment, a name of the first time window includes at least one of msgB-ResponseWindow, Msg1 (Message 1, message 1), PRACH, or Repetition.

### Embodiment 12

Embodiment 12 illustrates a structural block diagram of a processing apparatus used for a first node according to an embodiment of this application, as shown in FIG. 12. In FIG. 12, a processing apparatus 1200 in the first node includes a first processor 1201.

The first processor 1201 is configured to: send a Preamble on K1 time-frequency resources, a first reference time-frequency resource being one of the K1 time-frequency resources; and monitor first signaling as a response to sending the Preamble on the K1 time-frequency resources, the first signaling being used for scheduling a random access response, and the first signaling being scrambled by a first RNTI.

In Embodiment 12, each of the K1 time-frequency resources is used for the Preamble; the first RNTI depends on only the first reference time-frequency resource in the K1 time-frequency resources; and K1 is an integer greater than 1.

As an embodiment, a first reference downlink RS resource is used for determining the first reference time-frequency resource; the first reference downlink RS resource is a downlink RS resource in a first downlink RS resource set, and the first downlink RS resource set includes at least two downlink RS resources; and the K1 time-frequency resources are associated with at least one downlink RS resource in the first downlink RS resource set.

As an embodiment, the first processor 1201 is configured to receive a first message, the first message indicating the first reference downlink RS resource in the first downlink RS resource set, where the first message is an RRC message.

As an embodiment, the first reference time-frequency resource is an earliest time-frequency resource in the K1 time-frequency resources in time domain.

As an embodiment, the first reference downlink RS resource is used for determining the given time-frequency resource; the given time-frequency resource is associated with a given downlink RS resource; the given time-frequency resource is one of the K1 time-frequency resources; the given downlink RS resource is one downlink RS resource in the first downlink RS resource set; the given downlink RS resource is different from the first reference downlink RS resource; and the given time-frequency resource is different from the first reference time-frequency resource.

As an embodiment, the first RNTI depends on K1.

As an embodiment, the first RNTI depends on K2, and K2 is a maximum value of K1.

As an embodiment, the first RNTI depends on Q1; and Q1 is a quantity of downlink RS resources included in the first downlink RS resource set.

As an embodiment, the first RNTI depends on Q2; and Q2 is a quantity of downlink RS resources included in a target downlink RS resource set; and the first downlink RS resource set is a subset of the target downlink RS resource set.

As an embodiment, the first processor 1201 is configured to set a random access type before sending the Preamble on the K1 time-frequency resources, where the first RNTI depends on the random access type.

As an embodiment, the first processor 1201 includes at least a first transmitter.

As an embodiment, the first processor 1201 includes at least a first receiver.

As an embodiment, the first processor 1201 includes at least a first transmitter and a first receiver.

As an embodiment, the first receiver includes an antenna 452, a receiver 454, a multi-antenna receiving processor 458, a receiving processor 456, a controller/processor 459, a memory 460, and a data source 467 shown in FIG. 4 of this application.

As an embodiment, the first receiver includes an antenna 452, a receiver 454, a multi-antenna receiving processor 458, and a receiving processor 456 shown in FIG. 4 of this application.

As an embodiment, the first receiver includes an antenna 452, a receiver 454, and a receiving processor 456 shown in FIG. 4 of this application.

As an embodiment, the first transmitter includes an antenna 452, a transmitter 454, a multi-antenna transmit processor 457, a transmit processor 468, a controller/processor 459, a memory 460, and a data source 467 shown in FIG. 4 of this application.

As an embodiment, the first transmitter includes an antenna 452, a transmitter 454, a multi-antenna transmit processor 457, and a transmit processor 468 shown in FIG. 4 of this application.

As an embodiment, the first transmitter includes an antenna 452, a transmitter 454, and a transmit processor 468 shown in FIG. 4 of this application.

### Embodiment 13

Embodiment 13 illustrates a structural block diagram of a processing apparatus used for a second node according to an embodiment of this application, as shown in FIG. 13. In FIG. 13, the processing apparatus 1300 in the second node includes a second processor 1301.

The second processor 1301 is configured to: receive a Preamble sent on K1 time-frequency resources, a first reference time-frequency resource being one of the K1 time-frequency resources; and send first signaling as a response to receiving the Preamble sent on the K1 time-frequency resources, the first signaling being used for scheduling a random access response, and the first signaling being scrambled by a first RNTI.

In Embodiment 13, each of the K1 time-frequency resources is used for the Preamble; the first RNTI depends on only the first reference time-frequency resource in the K1 time-frequency resources; and K1 is an integer greater than 1.

As an embodiment, a first reference downlink RS resource is used for determining the first reference time-frequency resource; the first reference downlink RS resource is a downlink RS resource in a first downlink RS resource set, and the first downlink RS resource set includes at least two downlink RS resources; and the K1 time-frequency resources are associated with at least one downlink RS resource in the first downlink RS resource set.

As an embodiment, the second processor 1301 is configured to send a first message, the first message indicating the first reference downlink RS resource in the first downlink RS resource set, where the first message is an RRC message.

As an embodiment, the first reference time-frequency resource is an earliest time-frequency resource in the K1 time-frequency resources in time domain.

As an embodiment, the first reference downlink RS resource is used for determining the given time-frequency resource; the given time-frequency resource is associated with a given downlink RS resource; the given time-frequency resource is one of the K1 time-frequency resources; the given downlink RS resource is one downlink RS resource in the first downlink RS resource set; the given downlink RS resource is different from the first reference downlink RS resource; and the given time-frequency resource is different from the first reference time-frequency resource.

As an embodiment, the first RNTI depends on K1.

As an embodiment, the first RNTI depends on K2, and K2 is a maximum value of K1.

As an embodiment, the first RNTI depends on Q1; and Q1 is a quantity of downlink RS resources included in the first downlink RS resource set.

As an embodiment, the first RNTI depends on Q2; and Q2 is a quantity of downlink RS resources included in a target downlink RS resource set; and the first downlink RS resource set is a subset of the target downlink RS resource set.

As an embodiment, a random access type is set before a Preamble is sent on the K1 time-frequency resources, where the first RNTI depends on the random access type.

As an embodiment, the second processor 1301 includes at least a second transmitter.

As an embodiment, the second processor 1301 includes at least a second receiver.

As an embodiment, the second processor 1301 includes at least a second transmitter and a second receiver.

As an embodiment, the second transmitter includes an antenna 420, a transmitter 418, a multi-antenna transmit processor 471, a transmit processor 416, a controller/processor 475, and a memory 476 in FIG. 4 of this application.

As an embodiment, the second transmitter includes an antenna 420, a transmitter 418, a multi-antenna transmit processor 471, and a transmit processor 416 shown in FIG. 4 of this application.

As an embodiment, the second transmitter includes an antenna 420, a transmitter 418, and a transmit processor 416 shown in FIG. 4 of this application.

As an embodiment, the second receiver includes an antenna 420, a receiver 418, a multi-antenna receiving processor 472, a receiving processor 470, a controller/processor 475, and a memory 476 shown in FIG. 4 of this application.

As an embodiment, the second receiver includes an antenna 420, a receiver 418, a multi-antenna receiving processor 472, and a receiving processor 470 shown in FIG. 4 of this application.

As an embodiment, the second receiver includes an antenna 420, a receiver 418, and a receiving processor 470 shown in FIG. 4 of this application.

Those of ordinary skill in the art can understand that all or some of the steps in the foregoing method can be implemented by instructing relevant hardware by a program. The program may be stored in a computer-readable storage medium, such as a read-only memory, a hard disk, or an optical disc. Optionally, all or some of the steps of the foregoing embodiment may also be implemented by using one or more integrated circuits. Correspondingly, each module unit in the foregoing embodiment may be implemented in a form of hardware, or may be implemented in a form of a software functional module. This application is not limited to any specific combination of software and hardware. The user equipment, the terminal, and the UE in this application include, but are not limited to, wireless communication devices such as an unmanned aerial vehicle, a communication module in an unmanned aerial vehicle, a remote control aircraft, an aircraft, a small aircraft, a mobile phone, a tablet computer, a notebook computer, an in-vehicle communication device, a wireless sensor, a WAN card, an Internet of Things terminal, an RFID terminal, an NB-IOT terminal, an MTC (Machine Type Communication, machine type communication) terminal, an eMTC (enhanced MTC, enhanced MTC) terminal, a data card, a low-cost mobile phone, and a low-cost tablet computer. The base station or system device in this application includes, but is not limited to, a wireless communication device such as a macrocellular base station, a microcellular base station, a home base station, a relay base station, a gNB (NR NodeB) NR NodeB, and a TRP (Transmitter Receiver Point, transmitter receiver point).

The foregoing descriptions are merely preferred embodiments in this application and are not intended to limit the protection scope of this application. Any modification, equivalent replacement and improvement made within the spirit and principle of this application shall be included in the protection scope of this application.

## Claims

1. A first node for radio communication, comprising:
a first processor, configured to: send a Preamble on K1 time-frequency resources, a first reference time-frequency resource being one of the K1 time-frequency resources; and monitor first signaling as a response to sending the Preamble on the K1 time-frequency resources, the first signaling being used for scheduling a random access response, and the first signaling being scrambled by a first RNTI;
wherein each of the K1 time-frequency resources is used for the Preamble; the first RNTI depends on only the first reference time-frequency resource in the K1 time-frequency resources; and K1 is an integer greater than 1.

2. The first node according to claim 1, wherein a first reference downlink RS resource is used for determining the first reference time-frequency resource; the first reference downlink RS resource is a downlink RS resource in a first downlink RS resource set, and the first downlink RS resource set comprises at least two downlink RS resources; and the K1 time-frequency resources are associated with at least one downlink RS resource in the first downlink RS resource set.

3. The first node according to claim 2, comprising:
the first processor being configured to receive a first message, the first message indicating the first reference downlink RS resource in the first downlink RS resource set;
wherein the first message is an RRC message.

4. The first node according to claim 2, wherein the first reference time-frequency resource is an earliest time-frequency resource in the K1 time-frequency resources in time domain.

5. The first node according to any one of claims 2 to 4, wherein the first reference downlink RS resource is used for determining the given time-frequency resource; the given time-frequency resource is associated with a given downlink RS resource; the given time-frequency resource is one of the K1 time-frequency resources; the given downlink RS resource is one downlink RS resource in the first downlink RS resource set; the given downlink RS resource is different from the first reference downlink RS resource; and the given time-frequency resource is different from the first reference time-frequency resource.

6. The first node according to any one of claims 1 to 5, wherein the first RNTI depends on K1.

7. The first node according to any one of claims 1 to 6, wherein the first RNTI depends on K2, and K2 is a maximum value of K1.

8. The first node according to any one of claims 1 to 7, wherein the first RNTI depends on Q1; and Q1 is a quantity of downlink RS resources comprised in the first downlink RS resource set.

9. The first node according to any one of claims 1 to 8, wherein the first RNTI depends on Q2; Q2 is a quantity of downlink RS resources comprised in a target downlink RS resource set; and the first downlink RS resource set is a subset of the target downlink RS resource set.

10. The first node according to any one of claims 1 to 9, comprising:
the first processor being configured to set a random access type before sending the Preamble on the K1 time-frequency resources;
wherein the first RNTI depends on the random access type.

11. A second node for radio communication, comprising:
a second processor, configured to: receive a Preamble sent on K1 time-frequency resources, a first reference time-frequency resource being one of the K1 time-frequency resources; and send first signaling as a response to receiving the Preamble sent on the K1 time-frequency resources, the first signaling being used for scheduling a random access response, and the first signaling being scrambled by a first RNTI;
wherein each of the K1 time-frequency resources is used for the Preamble; the first RNTI depends on only the first reference time-frequency resource in the K1 time-frequency resources; and K1 is an integer greater than 1.

12. A method used in a first node for radio communication, comprising:
sending a Preamble on K1 time-frequency resources, a first reference time-frequency resource being one of the K1 time-frequency resources; and monitoring first signaling as a response to sending the Preamble on the K1 time-frequency resources, the first signaling being used for scheduling a random access response, and the first signaling being scrambled by a first RNTI;
wherein each of the K1 time-frequency resources is used for the Preamble; the first RNTI depends on only the first reference time-frequency resource in the K1 time-frequency resources; and K1 is an integer greater than 1.

13. A method used in a second node for radio communication, comprising:
receiving a Preamble sent on K1 time-frequency resources, a first reference time-frequency resource being one of the K1 time-frequency resources; and sending first signaling as a response to receiving the Preamble sent on the K1 time-frequency resources, the first signaling being used for scheduling a random access response, and the first signaling being scrambled by a first RNTI;
wherein each of the K1 time-frequency resources is used for the Preamble; the first RNTI depends on only the first reference time-frequency resource in the K1 time-frequency resources; and K1 is an integer greater than 1.
